# EUROPEAN PATENT APPLICATION

(11) **EP 4 825 556 A2**
(43) Date of publication of application: **21.10.2026**
(21) Application number: 26203464.8
(22) Date of filing: 09.11.2023
(51) Int. Cl.: B28D 5/00

(54) **METHOD FOR FORMING A WORKPIECE AND MACHINE FOR IMPLEMENTING SAID METHOD**

(30) Priority: 09.11.2022 US 202263424029 P; 19.05.2023 US 202363503309 P; 30.06.2023 US 202363511504 P
(62) Document number(s) of the earlier application(s) in accordance with Art. 76 EPC: 23208798.1 / 4 368 335
(71) Applicant: KB Machines US Holdings, LLC, Elmira, NY 14903 (US)
(72) Inventor: NOBS, Martin, Elgin, 60120 (US); EGETER, Michael, 8580 Amriswil (CH); KINNEY, Brian Lee, Traverse City, 49686 (US); BERRY, Benjamin, Grawn, 49637 (US)
(74) Representative: V.O.

(57) **Abstract**

The present invention relates to several systems and methods for clamping, machining, inspecting, and/or correcting workpieces in an integrated machine.

## Description

### CROSS-REFERENCE TO RELATED APPLICATION(S)

The present disclosure relates to U.S. Provisional Patent Application No. 63/424,029, filed November 9, 2022, U.S. Provisional Patent Application No. 63/503,309, filed May 19, 2023, and U.S. Provisional Patent Application No.: 63/511,504, filed June 30, 2023 the disclosures of each of which are herein incorporated by reference in their entirety.

### BACKGROUND

### Field

The present disclosure is generally related to a method and system/machine for machining a workpiece.

### Description of Related Art

Wafers (e.g., semiconductor wafers) are typically formed by cutting portions along an elongated crystal bar or ingot, also referred to as a boule, using a saw or a slicer. Such boules may be formed of silicon and carbon, such as SiC.

In order to prepare boules for cutting into wafers, the boules themselves may be processed - e.g., machined, ground, polished, etc. - first. Typically, grinding and polishing and other finishing steps are performed individually on boules, i.e., each step includes manually arranging boule(s) for each of the applied finishing processes. For example, each of the boules may be individually glued on a spindle, and, after drying or setting, grinding may be performed on the glued boule. Each step of the process may be performed periodically and/or at different stations. Each boule may be moved and/or removed in each step or station. Typically, such processes for preparing the boule for cutting and measuring them for accuracy are time-consuming and require several different systems.

Improving such a process of forming and/or finishing a boule and other workpieces would be advantageous.

### SUMMARY

It is an aspect of this disclosure to provide a system for forming a workpiece within an enclosure. The system may include at least one workhead disposed within the enclosure and configured to contact and hold a workpiece. The system may further include a tooling assembly disposed within the enclosure for griding a surface of the workpiece while the workpiece is in contact with the at least one workhead. The system may further include an X-ray machine disposed within the enclosure and configured to obtain at least one of X-ray images and diffraction data from the workpiece that is held by the at least one workhead.

Another aspect provides a method for forming a workpiece, the method including: loading the workpiece onto a first workhead; relatively positioning the workpiece with respect to a second workhead or workhead so that the workpiece is in contact with both the first workhead and the second workhead; grinding an outer peripheral surface of the workpiece in contact with the first workhead and the second workhead using a first grinding wheel; grinding a face of the workpiece held by the first workhead using a second grinding wheel; and unloading the workpiece.

Another aspect provides a machine for forming a workpiece. The machine has: a first workhead configured to contact and hold a workpiece; and a second workhead configured to contact the workpiece. The machine also has a first grinding wheel for grinding an outer peripheral surface of the workpiece in contact with the first workhead and the second workhead, and a second grinding wheel for grinding a face of the workpiece held by the first workhead.

Another aspect pertains to a computer-readable medium which when executed by a processor may perform a method, including sending instructions to an X-ray machine to inspect a crystalline orientation of a workpiece while the workpiece is held by a first holder assembly. The method may further include receiving data from the X-ray machine to determine the crystalline orientation of the workpiece. The method may further include sending instructions to a tooling assembly based on the determined crystalline orientation, the tooling assembly having a grinding wheel configured to grind the workpiece to correct the crystalline orientation, the workpiece remaining held by the first holder assembly while being ground by the grinding wheel. The method may further include sending further instructions to the X-ray machine to reinspect the crystalline orientation of the workpiece after it has been corrected. The method may further include receiving additional data from the X-ray machine to redetermine the crystalline orientation of the workpiece.

Several additional aspects, features, and advantages of the present disclosure will become apparent from the following detailed description, the accompanying drawings, and each of the appended claims. Each of the appended claims (even the dependent ones) should be read independently and are hereby incorporated by reference into this summary.

### BRIEF DESCRIPTION OF THE DRAWINGS

FIG. 1A shows a schematic diagram of a machine for forming a workpiece in accordance with embodiments of this disclosure.
FIG. 1B shows an overhead view (i.e., looking downward) of parts or subcomponents of the machine of FIG. 1A in accordance with embodiments of this disclosure.
FIG. 1C is an alternate schematic diagram in a perspective view of the parts or subcomponents shown in FIG. 1B for explanation purposes.
FIG. 1D is an alternate schematic diagram in a perspective view where the parts or subcomponents shown in FIG. 1B are mounted onto independent mounting assemblies in accordance with embodiments of this disclosure.
FIG. 1E is an alternate schematic diagram in a perspective view where the parts or subcomponents of the tooling assembly shown in FIG. 1B are mounted onto a robotic arm in accordance with embodiments of this disclosure.
FIG. 1F shows an overhead view where a vacuum system and a tool changing system are schematically included among the parts or subcomponents of the machine of FIG. 1A in accordance with embodiments of this disclosure.
FIG. 2A illustrates, in isometric views, exemplary features of a first workhead and a second workhead of the machine of FIGS. 1A-1F, in accordance with embodiments of this disclosure.
FIG. 2B is a cross-sectional schematic diagram illustrating the vacuum plate being used to secure the workpiece to a holder assembly by applying a vacuum through a plurality of distribution passages in accordance with embodiments of this disclosure, wherein dashed lines indicate fluid communication between the plurality of distribution passages, a vacuum channel, a vacuum line, and a vacuum pump.
FIG. 3A is a cross-sectional view of the first holder assembly in accordance with embodiments of this disclosure, showing the workpiece in a first position and parts of the first holder assembly in a first position.
FIG. 3B is a magnified view of area 3B from FIG. 3A, wherein the clamping mechanism is in an open position in accordance with embodiments of this disclosure.
FIG. 4 is a cross-sectional view of the first holder assembly of FIG. 3A, showing the workpiece in the first position and parts of the first holder assembly in a second position.
FIG. 5A is a cross-sectional view of the first holder assembly in accordance with embodiments of this disclosure, showing the workpiece in a second position and parts of the first holder assembly in a first position.
FIG. 5B is a magnified view of area 5B from FIG. 5A, wherein the clamping mechanism is in an open position in accordance with embodiments of this disclosure.
FIG. 6 is a cross-sectional view of the first holder assembly of FIG. 3A, showing the workpiece in the second position and parts of the first holder assembly in a second position.
FIG. 7 shows an example of a workpiece that is to be placed into the machine in one embodiment and formed/machined by the machine of FIGS. 1A-1F, in accordance with embodiments herein.
FIG. 8 shows an overhead view of a loading position for loading a workpiece in the disclosed machine.
FIG. 9 shows an overhead view of a second position for the disclosed machine.
FIG. 10 shows an overhead view of the first and second workheads in a position for securing a workpiece.
FIG. 11 shows an overhead view of a grinding operation for grinding an outer peripheral surface of the workpiece using the machine, in accordance with an embodiment.
FIG. 12A shows an optional grinding operation for grinding a face (e.g., dome side) of the workpiece using the machine, in accordance with an embodiment.
FIG. 12B shows an optional grinding operation for grinding a face (e.g., dome side) of the workpiece using the second grinding wheel of the machine, in accordance with an embodiment.
FIG. 13 shows an overhead view of the machine with an X-ray machine, in accordance with an embodiment.
FIG. 14 is a cross-sectional view of the first workhead, illustrating rotational movement of the workpiece in the machine, in accordance with an embodiment.
FIG. 15A is an isometric view of the first workhead with the workpiece being subject to a grinding operation for grinding a face of the workpiece using the machine, in accordance with an embodiment.
FIG. 15B is an isometric view of the first workhead with the workpiece being subject to a grinding operation where the second grinding wheel is able to rotate about an additional axis D-D, in accordance with an embodiment.
FIG. 16 is an overhead view showing transfer of the workpiece from the first workhead to the second workhead of the machine.
FIGS. 17A, 17B, and 17C show overhead and perspective views of a grinding operation(s) for grinding an outer peripheral surface of the workpiece using the machine, in accordance with embodiments.
FIG. 17D shows a perspective view of a grinding operation(s) for grinding a notch or flat into the outer peripheral surface of the workpiece in accordance with embodiments.
FIG. 18A is an overhead view of the second workhead with the workpiece being subject to a grinding operation for grinding a face of the workpiece using the machine, in accordance with an embodiment.
FIG. 18B is an overhead view of the second workhead with the workpiece being subject to a grinding operation for grinding a face of the workpiece using the second grinding wheel of the machine, in accordance with an embodiment.
FIG. 19 is an overhead view showing transfer of the workpiece between the second workhead and the first workhead of the machine.
FIG. 20 shows an overhead view of movement of the first workhead to an unloading position for unloading the workpiece in the disclosed machine.
FIG. 21 shows a schematic diagram of an overhead view of parts or subcomponents of the machine of FIG. 1A where the first grinding wheel is a cylindrical disk in accordance with embodiments.
FIG. 22 shows a schematic diagram of an overhead view of parts or subcomponents of the machine of FIG. 1A where the first grinding wheel is a cylindrical disk in accordance with embodiments.
FIG. 23 shows a schematic diagram of an overhead view of parts or subcomponents of the machine of FIG. 1A where the first grinding wheel is a cylindrical disk in accordance with embodiments.
FIG. 24 shows a schematic diagram of an overhead view of parts or subcomponents of the machine of FIG. 1A where the first grinding wheel is a cylindrical disk in accordance with embodiments.
FIG. 25 shows a schematic diagram of an overhead view of parts or subcomponents of the machine of FIG. 1A where the first grinding wheel has multifaceted sides in accordance with embodiments.
FIG. 26 is a cross-sectional view of the first workhead in accordance with embodiments of this disclosure.
FIG. 27 is a system diagram illustrating connections between the computer and the electrical components of the machine, wherein dashed lines indicate two-way communication via a communication network in accordance with embodiments.
FIG. 28 is a system diagram illustrating connections between the processor and the electrical components of the machine to enable encoder-based control in accordance with embodiments.
FIG. 29 is a block diagram illustrating a method for correcting the crystalline orientation of the workpiece using X-ray imaging in accordance with embodiments.
FIG. 30 shows an overhead view of a workpiece being held by a workhead and first holder assembly before the rough surface correction operation in accordance with embodiments.
FIG. 31 shows an overhead view of a workpiece being held by a workhead and first holder assembly after the rough surface correction operation but before the crystalline orientation is corrected in accordance with embodiments.
FIG. 32 shows an overhead view of a workpiece being held by a workhead and first holder assembly after the crystalline orientation is corrected such that dotted lines indicate the removed first portion of the workpiece, in accordance with embodiments.

### DETAILED DESCRIPTION OF THE EMBODIMENT(S)

As evident by the drawings and below description, this disclosure relates to both a method and a machine (or system) that forms a workpiece (such as an ingot or boule), and, more particularly, that performs finishing techniques to workpieces via different subcomponents, tools, and control operations. The machine is designed to hold and manipulate the workpiece so that a series of operations and finishing techniques are applied to the workpiece via a controller and/or a processor. As a result, the machine is configured to automatically perform multiple operations to a workpiece in a series of steps (although the order of such steps is not limiting), thereby providing advantages such as (but not limited) reducing time, costs, and waste, as described here throughout.

In this disclosure, the term "workpiece" may be a semiconducting "boule", although it will be appreciated that many of the systems and methods described herein can apply to other workpieces (e.g., metal workpieces) and thus this invention is not limited to SiC boules or semiconductor applications.

As used herein, "configured to [verb]" means that the identified element or assembly has a structure that is shaped, sized, disposed, coupled and/or configured to perform the identified verb. For example, a member that is "configured to move" is movably coupled to another element and includes elements that cause the member to move, or the member is otherwise configured to move in response to other elements or assemblies. As such, as used herein, "configured to [verb]" recites structure and not function. Further, as used herein, "configured to [verb]" means that the identified element or assembly is intended to, and is designed to, perform the identified verb. Thus, an element that is merely capable of performing the identified verb, but which is not intended to, and is not designed to, perform the identified verb is not "configured to [verb]."

As used herein, the term "operatively coupled" shall mean two or more components are functionally connected through one or more intermediate parts such that displacement, manipulation, actuation, or a change in the state of any of the coupled components causes a predefined response in the remaining components.

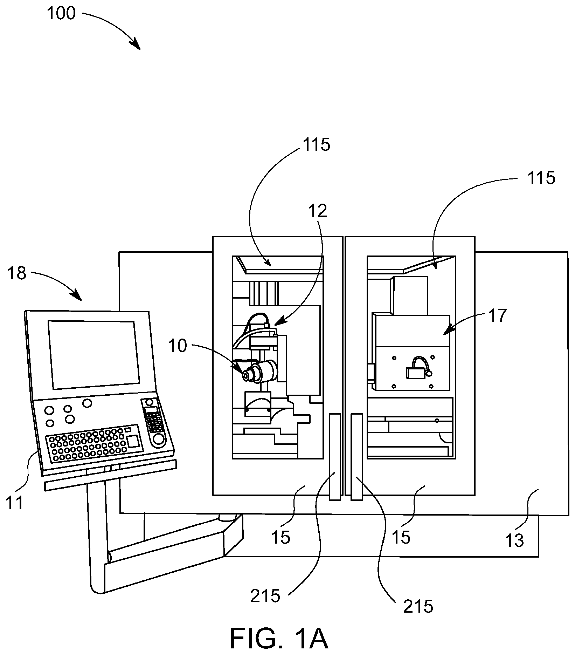

FIG. 1A shows a schematic diagram of a machine 100 or system for forming a workpiece (see workpiece 20 in the various FIGS., for example). The machine 100 has a number of subcomponents, tools, and devices that are integrated together and used and controlled to form the workpiece 20. Included and integrated with the machine 100 is a controller 18 and/or processor configured to control each of the subcomponents, tools, and devices (including first and second holder assemblies or workheads 10, 12 and the tooling assembly 17, and all subcomponents of all such assemblies). In addition to controlling operation and/or activation of the subcomponents, tools, etc., the controller 18 is also configured to control movements thereof. As shown in FIG. 1A, the controller 18 may include a computer system 11 that can be self-contained or distributed.

The computer 11 may include one or more of a digital processor, an analog processor, a digital circuit designed to process information, an analog circuit designed to process information, a state machine, and/or other mechanisms for electronically processing information. Although computer 11 is shown in FIG. 1A as a single entity, this is for illustrative purposes only. In some embodiments, computer 11 may comprise a plurality of computer subsyestems or processing units. These processing units may be physically located within the same device, or computer 11 may represent processing functionality of a plurality of devices operating in coordination.

Computer 11 may be configured to execute or implement the machining or grinding operations, X-ray imaging operations, and tool-changing operations by controlling the motors and/or mechanism thereof via software; hardware; firmware; some combination of software, hardware, and/or firmware; and/or other mechanisms for configuring processing capabilities on computer 11. The description of the functionality provided by the different components or features described below is for illustrative purposes, and is not intended to be limiting, as any of the components or features may provide more or less functionality than is described, which is not to imply that other descriptions are limiting. For example, one or more of the components or features may be eliminated, and some or all of its functionality may be provided by others of the components or features again which is not to imply that other descriptions are limiting. The computer 11 may be programmed to execute one or more computer program components. The computer program components or features may include software programs and/or algorithms coded and/or otherwise embedded in the computer 11, for example.

The computer 11 may include a memory in the form of electronic storage. The electronic storage may include non-transitory storage media that electronically stores information. The electronic storage media of the electronic storages may include one or both of (i) system storage that is provided integrally (e.g., substantially non-removable) with servers or client devices or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storage may store software algorithms, information determined by the processors, information obtained from servers, information obtained from client devices, or other information that enables the functionalities described herein.

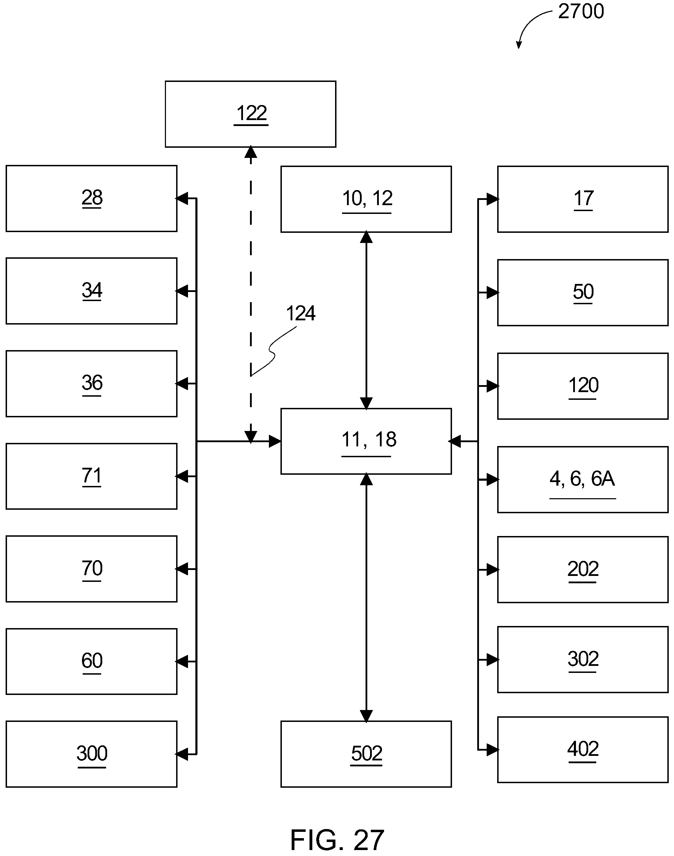

As shown in FIG. 1A, FIG. 27, and FIG. 28, the machine 100 may gain various operational capabilities by communicating with at least one external component 122 (e.g., an ingot manufacturing reactor, a server containing cloud data pertaining to various aspects of boules or wafers manufactured from prior operations of the machine 100 and that can be used by the controller for fine tuning future operations, or a centralized server and/or control system for remotely controlling operation of the machine 100 ). In some embodiments, the at least one supplemental component 122 may include a cloud data center, a third-party system, or a remote database that enables the machine 100 to perform remote data processing and information storage/retrieval operations. In some embodiments, the controller 18 (including computer 11) may communicate with the at least one supplemental component 122 via a communication network 124 (e.g., the Internet or the Internet in combination with various other networks, like local area networks, cellular networks, or personal area networks, internal organizational networks, and/or other networks). It should be noted that the controller 18 (including computer 11) may transmit and receive data, via the communication network 124, to and from the at least one supplemental component 122. As shown in FIG. 27, all electronic components 2700 of the machine 100 as illustrated therein. can be communicably coupled to the controller 18 (including computer 11) for data transmission and control signals.

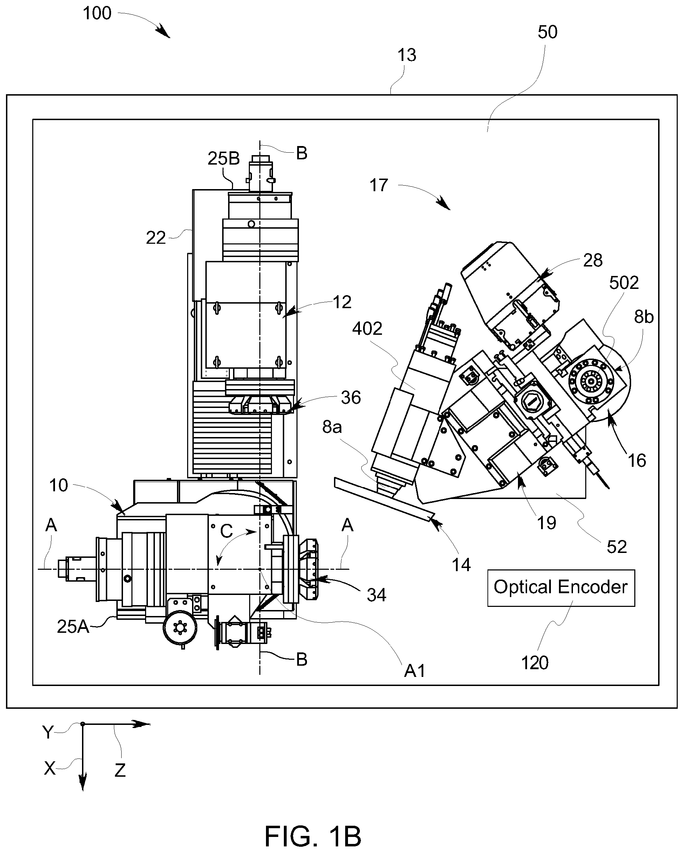

In embodiments, as seen in FIG. 1A, and 1B, parts and/or subcomponents may be contained in an enclosure 13. Such parts and/or subcomponents in the enclosure 13 may include, but are not limited to, the holder assemblies 10, 12, a tooling assembly 17, and all the devices configured to machine the workpiece 20 as disclosed herein. Optionally, one or more doors 15 may be provided as part of the enclosure 13 to allow and/or limit access to the enclosed parts and subcomponents. The doors 15 facilitate containing all of the grinding fluid and swarf from the boule inside the machine 100 during grinding operations. Additionally, the doors 15 keep personnel outside of the machine and away from moving components during operation. In one embodiment, the enclosure (e.g., a plurality of surrounding walls, a floor and a ceiling) provides a controlled environment. For example, it can be connected to a vacuum and/or air (or another specific gas-mixture) supply. The floor of the enclosure 13 may include a drainage holes connecting with a drainage system to drain cooling fluid (e.g., water) that may be sprayed on various parts of the machine (such as one or more of the grinding wheels mentioned herein) and/or the workpiece 20 to cool these elements during the grinding operations described herein.

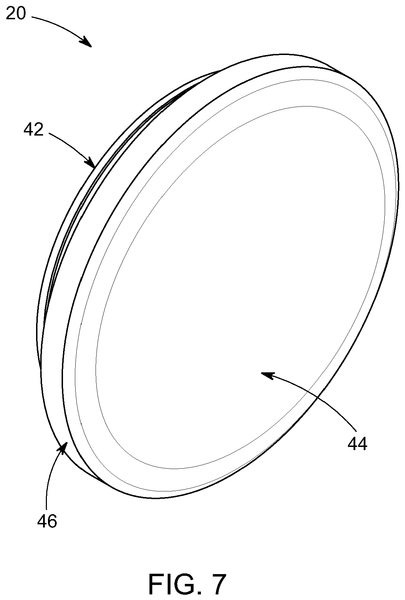

In accordance with some embodiments herein, the workpiece 20 that is machined by machine 100 can be a boule. In one example, the boule is formed from a silicon carbide material. An example of such a boule or workpiece 20 is shown by itself in FIG. 7. The workpiece 20 typically includes a first face 42, a second face 44, and an outer peripheral surface 46 (also referenced to as an outer peripheral portion, an edge, an outer perimeter, or an outer diameter (OD)) between the faces 42, 44. As illustrated, in accordance with embodiments herein, the periphery of the workpiece 20 may be generally rounded or circular, and in one embodiment specifically cylindrical. The first face 42 may be referred to as a seed side, and is typically flat or planar, whereas the second face 44 is typically arched, curved, dome shaped, or irregularly shaped, in either a convex and/or concave configuration and may for simplicity be referred to as a dome side. As will be explained hereinbelow, parts of the first workhead 10 and the second workhead 12 may be configured to accommodate differently shaped surfaces/faces of the workpiece 20. In some embodiments, the workpiece 20 may be a rod-like structure with an elongated edge extending between its two faces 42, 44. The sizes and shapes of the faces and surfaces (outer peripheral surfaces, edges) of the workpiece 20 as shown are exemplary only and are not meant to be limiting.

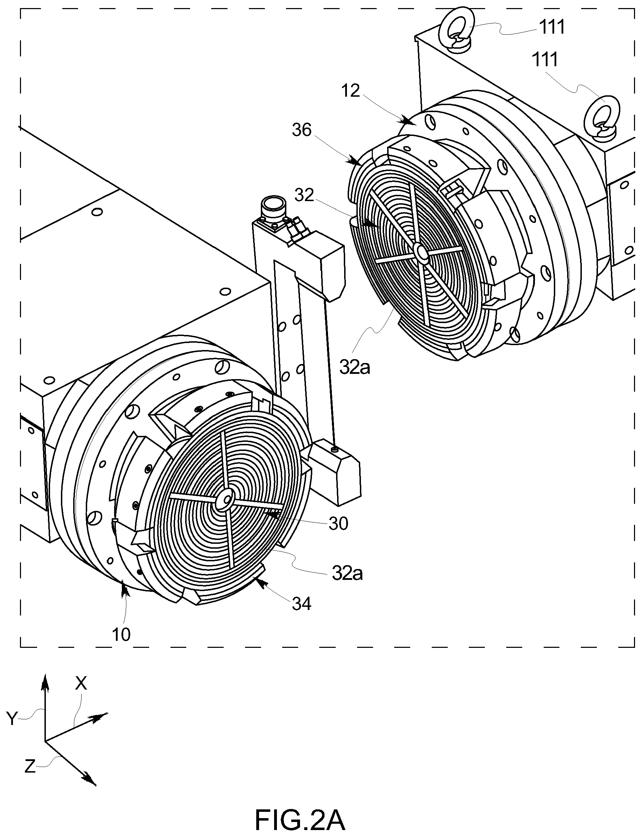

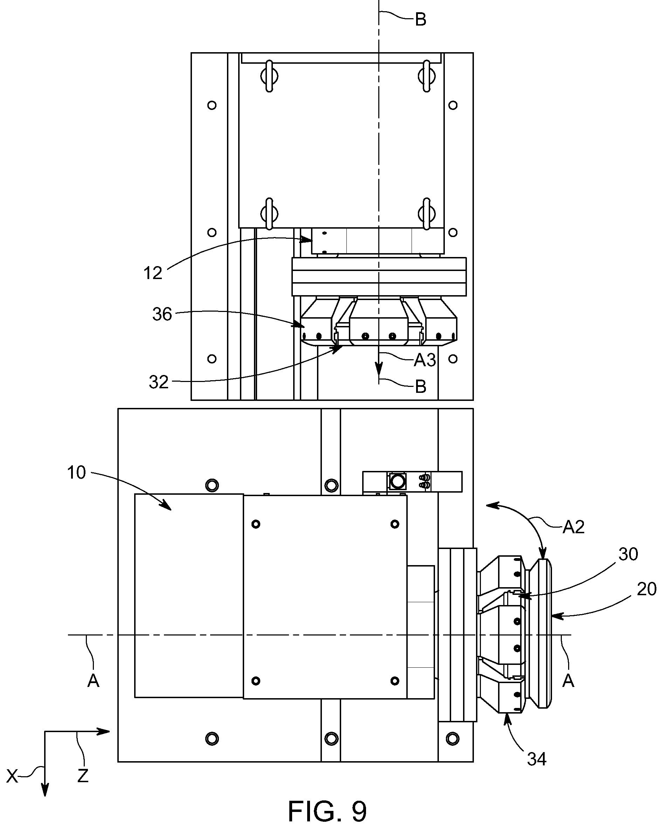

Turning to an overhead view (i.e., from above) in FIG. 1B, as schematically shown, in embodiments herein, the machine 100 has integrated therein a number of parts or subcomponents for forming the workpiece 20 in accordance with embodiments of this disclosure. In one embodiment, all parts or subcomponents shown in FIG. 1B may be provided or contained in the enclosure 13 of FIG. 1A, for example. In embodiments, the parts or subcomponents may include a first workhead 10 configured to contact and hold the workpiece 20 via its holder assembly 34 and at least a second workhead 12 configured to contact (and in some cases, optionally hold) the workpiece 20 via its holder assembly 36. The holder assemblies 10, 12 may each be attached to arms and/or a frame, a stand, or similar structure that is positioned in a space or room within the enclosure 13. The first workhead 10 has a first axis A-A in a first direction (e.g., in one embodiment, a horizontal direction) noted as the Z-direction or Z-plane, according to an embodiment. The second workhead 12 extends along a second axis B-B, which may also be in the same plane as the axis A-A (e.g., a horizontal plane). The axis B-B may be considered to extend in an X-direction. In one embodiment, workhead 10 is pivotable about a vertical axis (labeled A1), so that its axis A-A can be angularly offset from (e.g., perpendicular, 45 degrees, or otherwise angled) or coaxial relative to the axis B-B of workhead 12, according to an embodiment. As noted, in an embodiment, the first workhead 10 is configured for rotation about a first axis A1 (e.g., a vertical axis noted herein as the Y-axis, e.g., see FIG. 2A and FIG. 9). Rotation of the first workhead 10 about the vertical axis (see curved arrow C) may be in either direction and used for relatively positioning the workpiece 20 in alignment with axis B-B with respect to the second workhead 12 for clamping (sandwiching) the workpiece between the holder assemblies during a grinding operation of the workpiece periphery, for transferring/unloading the workpiece 20 from the first workhead 10 to the second workhead 12 (e.g. for a seed face grinding operation) or vice versa, and/or for rotating the workpiece 20 away from the axis B-B to a loading/unloading position and/or for a face grinding operation (as will be described). In one embodiment, the second workhead 12 moves linearly along the axis B-B, while the first workhead 10 also moves linearly along the axis A-A. In one embodiment, the axis A-A pivots (e.g., about axis A1) while the axis B-B is not permitted to pivot. In another optional embodiment both axis A-A and B-B are able to pivot, In an embodiment, either or both of the first workhead 10 and/or the second workhead 12 are configured for linear movement along the horizontal axis B-B (i.e., along the X-direction( In the description herein, although certain directions or planes may be described as "vertical" or "horizontal", this must be understood as merely examples for descriptive purposes, as these orientations are not limiting and can easily be changed to different angles or orientations simply by moving the various orientations of the mountings for the various components (e.g., the machine 100 could be mounted on a wall, rather than on the floor of a facility).

In an embodiment, movement of either the first workhead 10 towards the second workhead 12, or movement of the second workhead 12 towards the first workhead 10 (or movement of them individually or simultaneously) is performed during the method of forming the workpiece 20, e.g., in order to apply pressure to (both faces of) the workpiece 20 for securing/holding the workpiece therebetween, and/or to transfer the workpiece 20 from one workhead to the other. Accordingly, it should also be understood that the second workhead 12 is further configured to hold (grasp) the workpiece 20 (in addition to contacting the workpiece 20 as it is held by the first workhead 10) and/or receive the workpiece 20 from the first workhead 10 during forming. Further, the first workhead 10 and/or second workhead 12 may be configured for horizontal, linear, lateral, pivotal, swiveling, and/or rotational movement(s) on a number of the axes, e.g., in order to position a surface (face 42, 44, or outer peripheral surface 46) of the boule or workpiece 20 for an operation. A combination of movements may be utilized before, during, and/or after an operation is performed. For example, rotational movement of either workhead 10, 12 may include rotating about a particular axis itself and/or pivoting (swiveling) and an angle relative to that axis (e.g., back and forth and/or up and down), with examples of such movement being shown and described below and in the Figures. Moreover, it should also be understood to one of skill in the art that movement and/or actuation devices, such as motors and linear actuators may be associated with the machine 100 for implementing movement and actions for forming and processing the workpiece 20, including those for contacting and holding the workpiece/boule 20. As an example, in addition to clamping boules, according to embodiments herein, each workhead 10 and 12 may be equipped with its own drive mechanism 25A and 25B, respectively (see FIG. 1B), for moving each of the holder assemblies and/or implementing action(s) associated with the holder assemblies and its clamping parts (described in detail hereinbelow). In an embodiment, each drive mechanism 25A, 25B may include a direct drive torque motor, for example, paired with one or more encoders 120 (e.g., a rotary encoder, e.g., for accurate angular positioning). Movements to holder assemblies 10, 12 as initiated via drive mechanisms 25A and 25B and its parts may be controlled via a controller/processor 18, for example, which is described in detail hereinbelow.

FIG. 2A shows an example of lifting eyes or hooks 111 that may optionally be provided on the second workhead 12 and/or the first workhead 10 to provide lifting points for installing each workhead in the machine 100 or system. Such features are exemplary and not necessary for each workhead.

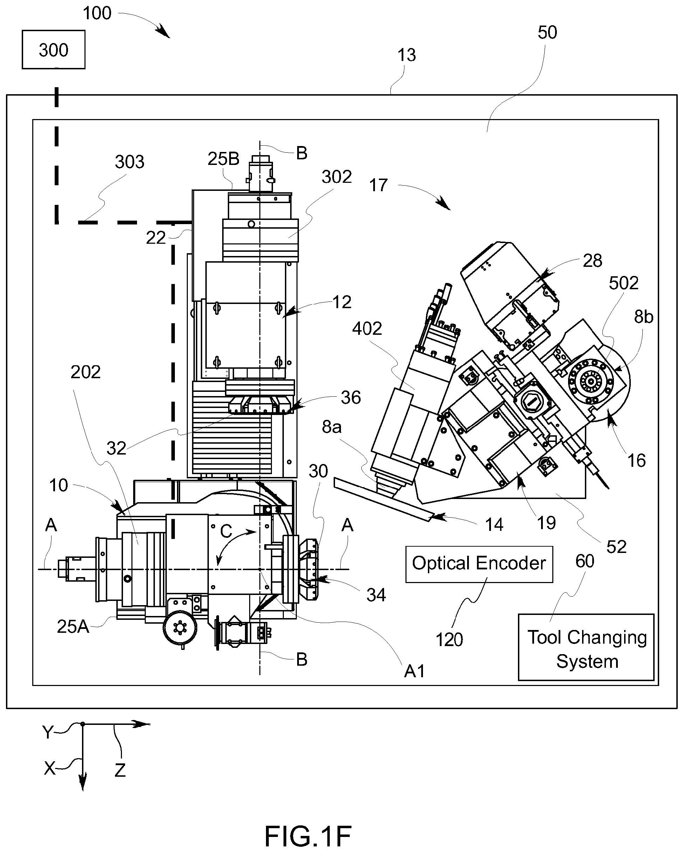

FIG. 1B shows an embodiment where the machine 100 includes a tooling assembly 17 designed to perform a number of manufacturing operations on the workpiece 20. The tooling assembly 17 may include a first interchangeable tooling 14, a second interchangeable tooling 16, a frame 19, and an X-ray machine 28. The first interchangeable tooling 14 and the second interchangeable tooling 16 are tools (in the illustrated embodiments, grinding wheels) forming part of the tooling assembly 17. Different such tooling can be connected to the machine 100 such that the machine 100 may be employed to perform different manufacturing operations. For example, grinding wheels of different types (coarse grinding wheels, fine grinding wheels, etc.) can be swapped out. The frame 19 is a support structure that mounts the first interchangeable tooling 14, the second interchangeable tooling 16, and the X-ray machine 28 for movement into desired positions during workpiece processing operations. In one embodiment, the first interchangeable tooling 14, the second interchangeable tooling 16, and the X-ray machine 28 may be spaced about the tooling assembly 17 to prevent any component from interfering with the operation of any other attached components. In further embodiments, electrical and fluid connections may be routed through the frame 19 and coupled to the first interchangeable tooling 14, the second interchangeable tooling 16, and the X-ray machine 28. In additional embodiments, a plurality of tools and sensing devices may be attached to the frame 19 to enable the machine 100 to perform multiple manufacturing operations both simultaneously and without activating tool changing system 60 (see FIG. 1F).

In one embodiment, the tool changing system 60 can have various machining tools, such as different grinding wheels, mounted thereon and can be actuated so that the appropriate tool is aligned with and mounted on an appropriate spindle of the tooling assembly 17. In on example, the tool changing system can utilize a structure as described in U.S. Patent 7,647,679, incorporated by reference herein in its entirety.

In some specific examples, first interchangeable tooling 14 and the second interchangeable tooling 16 may function as hot-swappable connection points for tools and toolholders including spindles, boring heads, collets, drill chucks, rotary tooling, shrink-fit machines, tapping heads, tool posts, and tool alignment gauges that can be stored by a tool changing system 60 as schematically illustrated in FIG. 1F. As shown in at least FIGS, 1B, 1F, 15B, and 17A-17C, the first interchangeable tooling 14 may be a first grinding wheel 14 and the second interchangeable tooling 16 may be a second grinding wheel 16. In some embodiments, the first grinding wheel 14 rotates about an axis C-C that is angularly offset from axis F-F (FIG. 1F), about which the second grinding wheel 16 rotates. In further embodiments, the two axis C-C and F-F are perpendicularly disposed. For example, as illustrated in FIG. 1F, griding wheel 14 rotates about spindle 8a that is configured for rotation about a horizontal axis, while griding wheel 16 rotates about spindle 8b that is configured for rotation about a vertical axis.

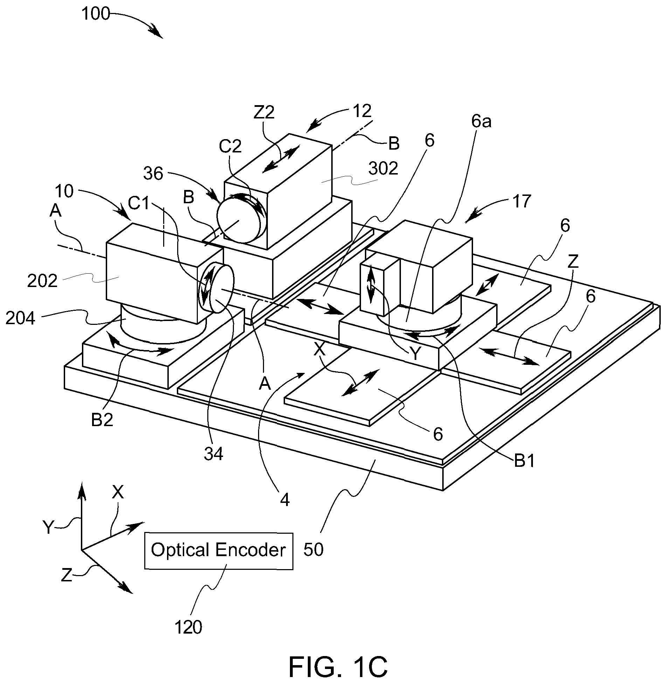

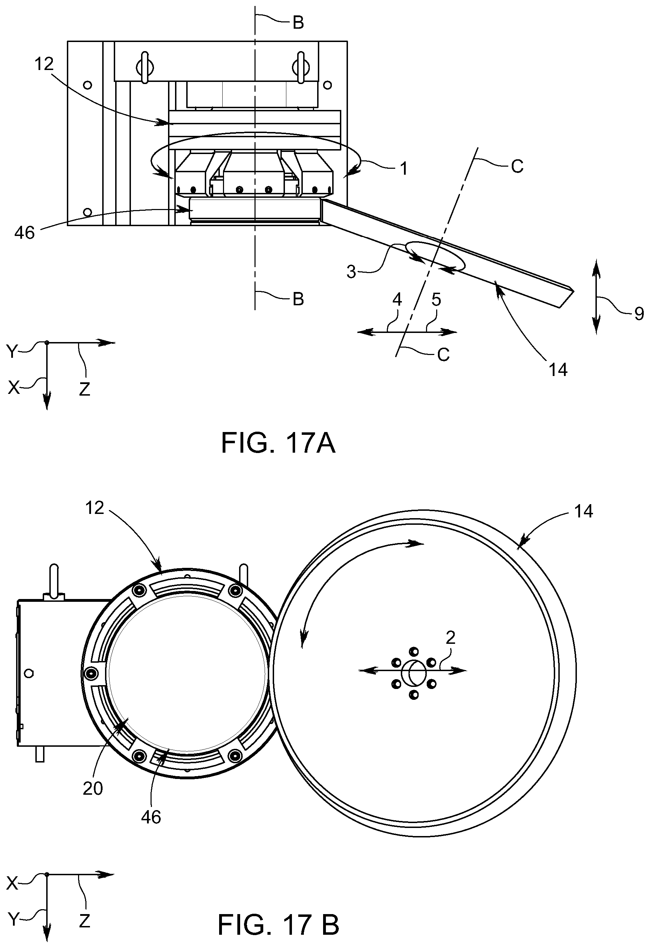

Tools and/or devices like grinding wheels 14, 16 are configured for movement as part of tooling assembly 17 with respect to the workpiece 20 and holder assemblies 10, 12 via various motors comprising a motor system 4 illustrated schematically in FIG. 1C, in accordance with various embodiments. FIGS. 1B, 1C, and 1F schematically depict such parts and tools like grinding wheels 14, 16, etc. being integrated into the tooling assembly 17 that is configured for movement in any number of directions by a motor system 4 comprising a plurality of motors, such movement, including towards and away from the holder assemblies 10, 12. Movement of such tools like grinding wheels 14, 16 and/or the frame 19 may be horizontal, linear, lateral, pivotal, swiveling, and/or rotational on a number of the axes, relative to the holder assemblies 10, 12 and/or workpiece 20, e.g., in order to perform an operation on the boule or workpiece 20. A combination of movements may be utilized before, during, and/or after an operation is performed. In one embodiment, for example, a 4-axis arm (see FIG. 1C and 17A) may be utilized for movement and use of such wheels 14, 16 and/or other tools.

Referring to FIGS. 1A-1E the first workhead 10, the second workhead 12, and the tooling assembly 17 are mounted within the enclosure 13 by a mounting assembly 50 within the enclosure. The mounting assembly 50 is a structure used to support the first workhead 10, the second workhead 12, and the tooling assembly 17 in configurations that facilitate performing grinding operations while restricting unwanted vibration and displacement of the workpiece 20 and tooling assembly 17. FIG. 1C shows an embodiment where the first workhead 10, the second workhead 12, and the tooling assembly 17 may be mounted onto a single baseplate (or plurality of baseplates) that functions as the mounting assembly 50. In this embodiment, the mounting assembly 50 acts as a workbench or platform the holder assemblies 10 and 12, and tooling assembly 17, may be mounted for movement by various motors and bearings, on which grinding operations may be executed.

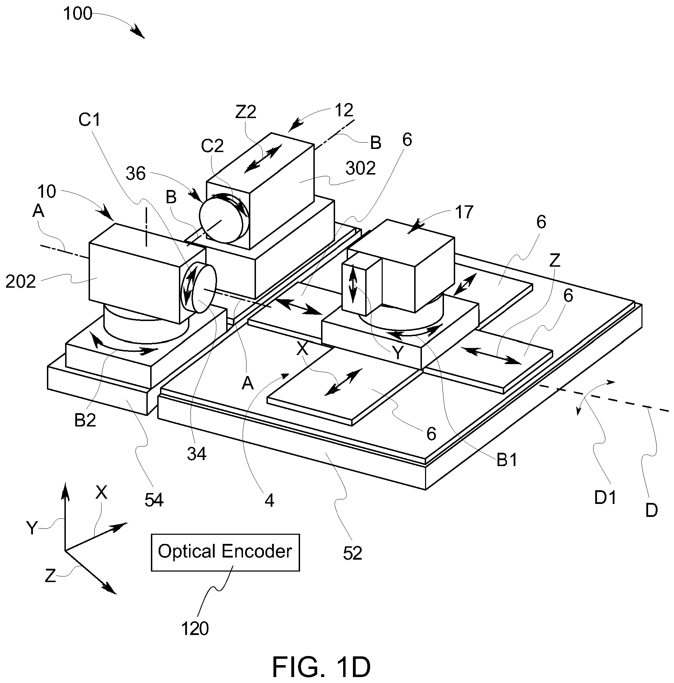

In one embodiment, as shown in FIG. 1D, the mounting assembly 50 includes a frame subassembly 52 and a workhead subassembly 54. The frame subassembly 52 and the workhead subassembly 54 are independent support structures that enable the tooling assembly 17 to be repositioned independently of the first workhead 10 and the second workhead 12. FIG. 1D shows an embodiment where the frame subassembly includes a platform that is capable of rotating about axis D-D which is parallel to and offset from axis A-A. Accordingly, the first grinding wheel 14, the second grinding wheel 16, and the X-ray machine 28 may be positioned to perform grinding operations and X-ray imaging.

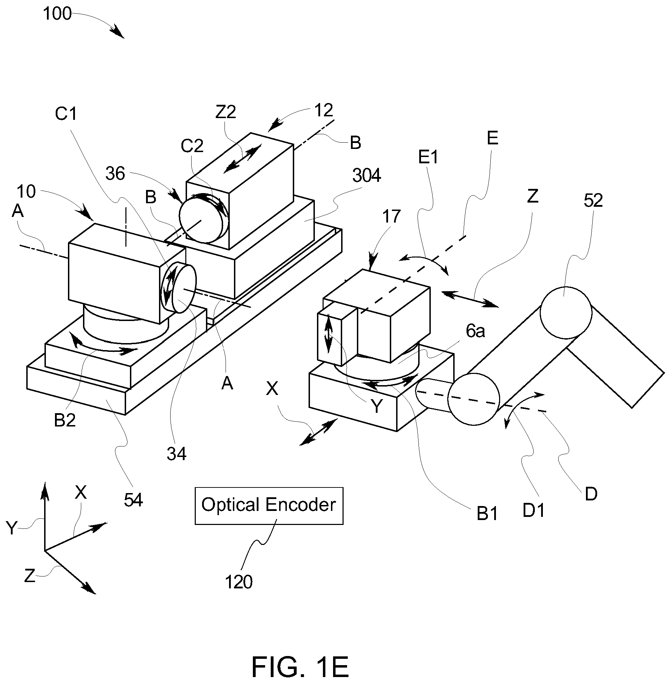

FIG. 1E shows an alternative embodiment where the frame subassembly 52 may include a multi-axis manipulation device (e.g., a robotic arm) and the tooling assembly 17 may function as an end effector for performing manufacturing operations including grinding, imaging, additive manufacturing, subtractive manufacturing, and multi-component assemblage. As used herein, the term "multi-axis manipulation" refers to linear, angular and rotational movement along and about at least the axis (e.g., X, Y, Z, A-A, B-B, C-C, D-D, and F-F) shown in FIGS. 1B-1F, 11-13, 15B, and 17D. One or more of these movements may take place one at a time or simultaneously. Accordingly, the frame subassembly 52 may reorient and reposition the tooling assembly 17 in any number of directions when performing grinding operations on the workpiece 20. In further embodiments, the workhead subassembly 54 may enable the first workhead 10, the second workhead 12, and the tooling assembly 17 can be moved independently of each other. In one embodiment, the first workhead 10, the second workhead 12, and the tooling assembly 17 may be provided with various motors to enable the tools thereof (e.g., grinding wheels and/or X-ray machine) to move with 5 axes of movement to enable precise and flexible movements and positioning of the tools provided thereon to facilitate the manufacturing operations described herein, among others. In an embodiment, the tooling assembly 17 may be mounted onto a gantry that enables multi-axis manipulation of the tooling assembly 17.

FIG. 1F shows an embodiment that schematically shows the aforementioned tool changing system 60 that is mounted within the enclosure 13. As noted previously, the tool changing system 60 houses a plurality of manufacturing tools that can be automatically attached to and removed from the first interchangeable tooling 14 and the second interchangeable tooling 16. The plurality of manufacturing tools may include grinding wheels, cutting fluid and coolant systems, drilling tools, indexable cutting tools, milling tools, threading tools, turning tools, boring tools, grooving tools, and measuring tools. In further embodiments, the frame subassembly 52 may position the tooling assembly 17 within the tool changing system 60 to exchange the type of tools attached to the first interchangeable tooling 14 and the second interchangeable tooling 16 thereby enabling the machine 100 to perform automatic tool switching. The ability to automatically switch tools enables the machine 100 to complete complex multistep grinding and manufacturing operations without any machine downtime.

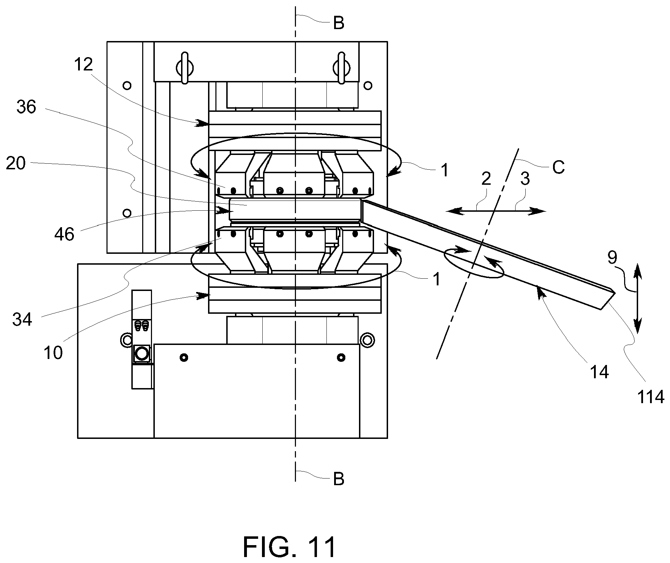

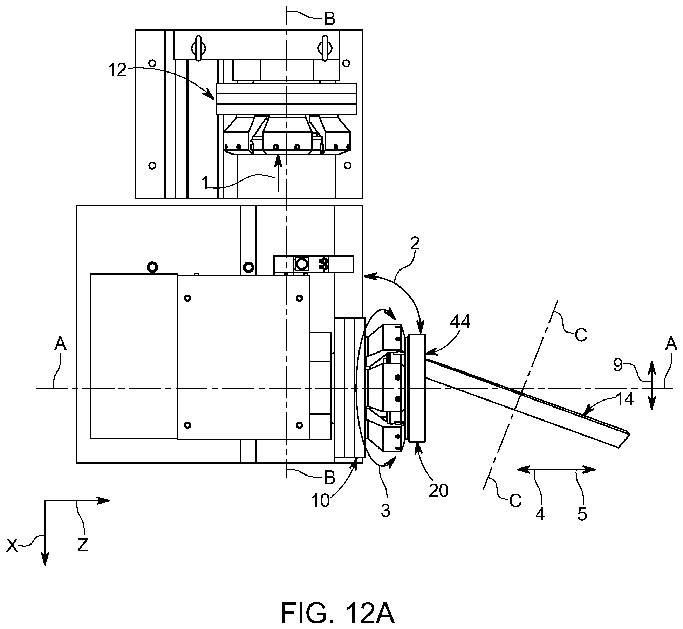

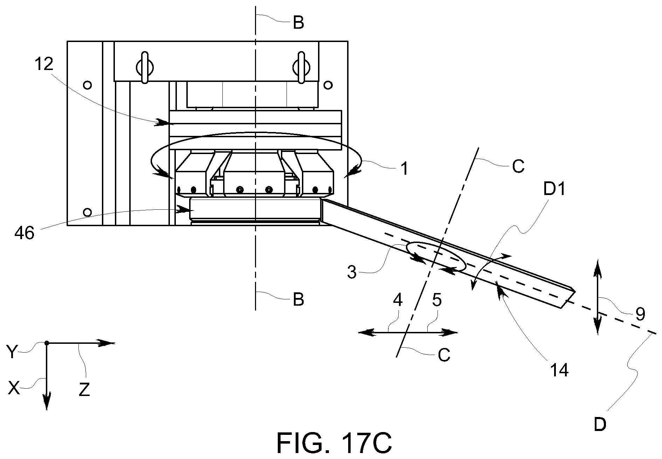

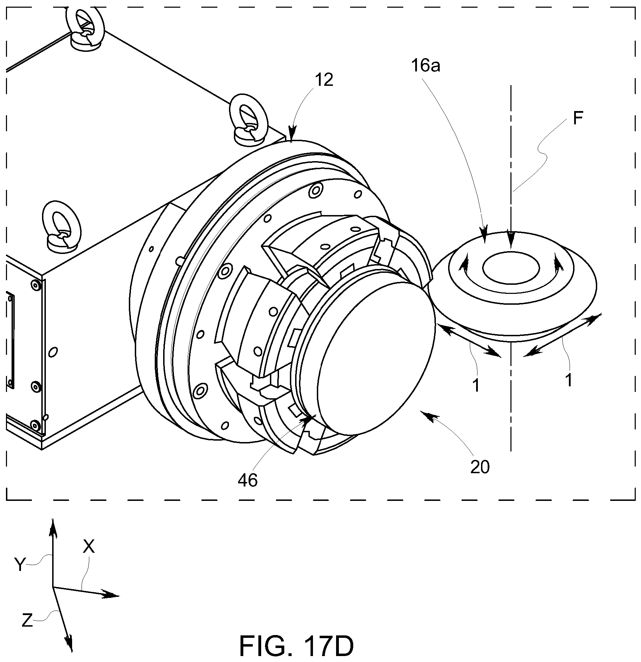

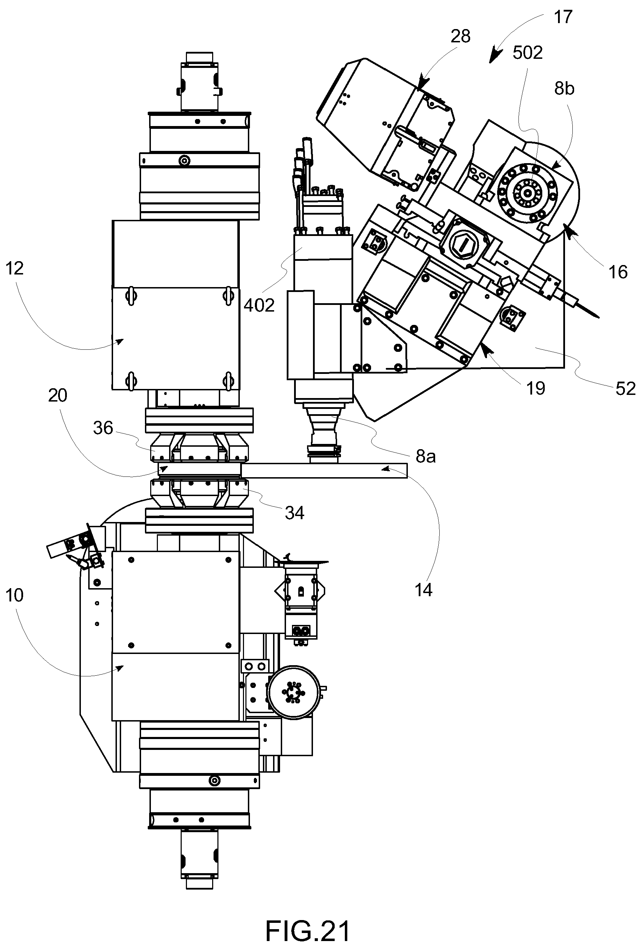

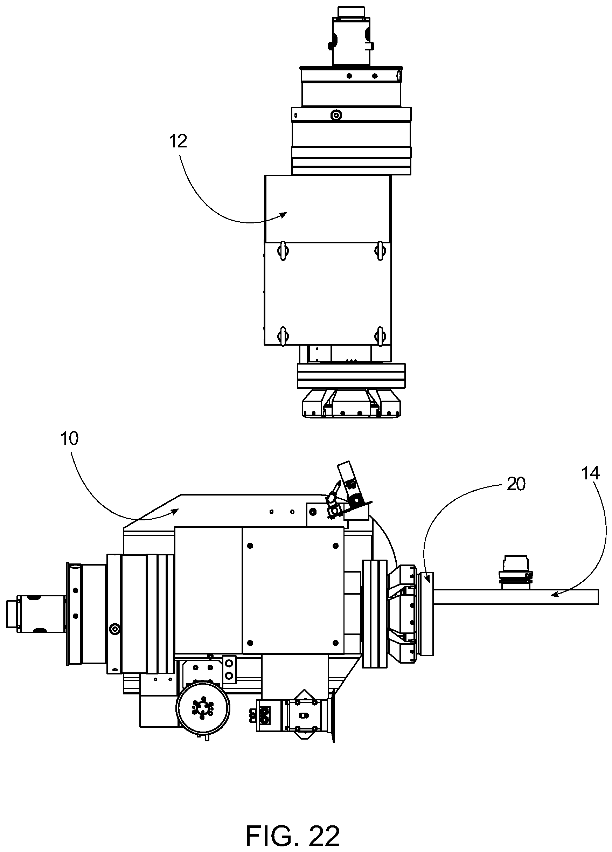

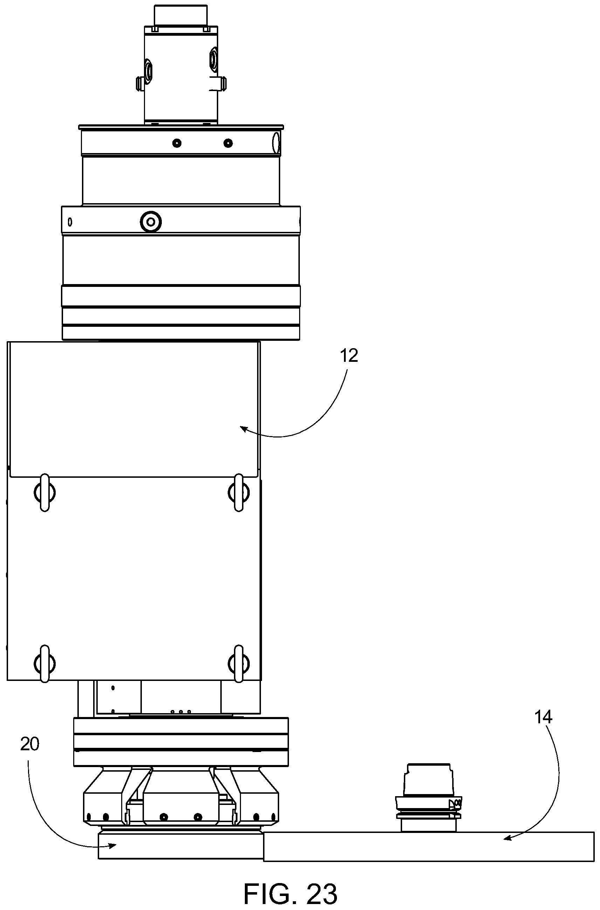

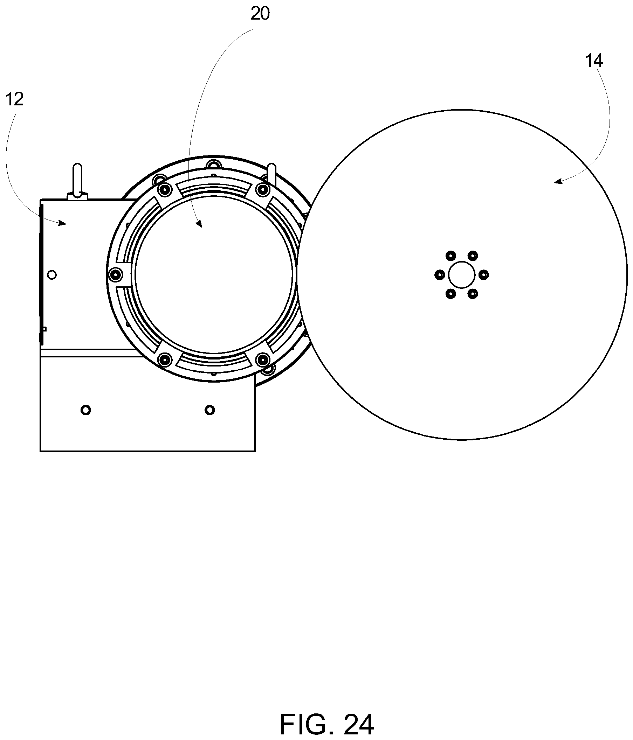

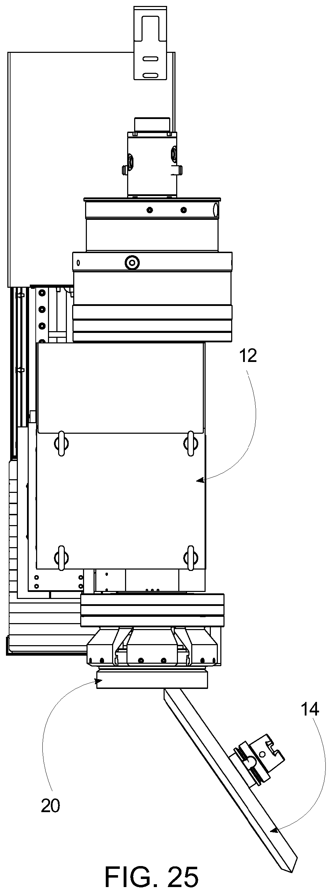

According to an exemplary embodiment, the first grinding wheel 14 may be used for grinding the one or more face(s) 42, 44 (see, e.g., FIG. 12A) and/or outer peripheral surface 46 (see, e.g., FIG. 7, FIG. 12A) or outer perimeter/diameter of the workpiece 20, and a second grinding wheel 16 (see, e.g., FIG. 17) may be used for grinding one or more face(s) 42, 44 of the workpiece 20, each wheel being schematically depicted in FIG. 1B. As understood by one of skill in the art and the description above, each wheel 14, 16 may be of generally circular shape with a grinding edge and may be provided on a spindle 8a, 8b for rotation thereof, e.g., via a rotational motor (see motors 402 and 502 in FIG. 1B) and/or arms or tracks 6 having bearings for linear movement (schematically shown in FIG. 1C) for linear movement). In accordance with embodiments herein, the first grinding wheel 14 is mounted on tooling assembly 17 configured for movement relative to the workpiece 20 such that its grinding edge is placed into contact, or retracted out of contact, with the face 42, 44 and/or outer peripheral surface 46 of the workpiece 20. In an embodiment, the first grinding wheel 14 may be moved at least towards and away from the workpiece 20. In one embodiment, as described hereinbelow with reference to FIG. 11, FIGS. 17A-17D, and FIGS. 21-25, the first grinding wheel 14 (and/or other machine tools) may be moved, e.g., linearly along an axis that is perpendicular to the axis B-B about which the workpiece 20 can be rotated (see, e.g., arrow 2-3 in FIG. 11) for engagement/disengagement with the outer peripheral surface 46 of the workpiece 20. In one non-limiting embodiment, the first grinding wheel 14 may be configured to rotate about a C-C axis, e.g., an axis that is angled relative to the B-B axis (i.e., a non-zero angle). In such an illustrated embodiment of FIG. 11, the grinding surface 114 of grinding wheel 14 is angled relative to axis C-C and parallel to axis B-B as it moves into contact with the peripheral surface of workpiece 46. In another embodiment (e.g., see FIG. 23) the axes B-B and C-C are parallel, and the edge surface 114 of grinding wheel 14 is parallel to axis C-C.

With respect to these figures, and all the figures in this disclosure, it should be appreciated that all the different permutations, orientations, and arrangements can be interchanged with one another. Thus, this disclosure should not only be considered to disclose various different embodiments, but it should also be appreciated that the various embodiments describing different components and configurations can be exchanged with others as will be appreciated by the context set forth herein throughout this disclosure.

In an embodiment, grinding the edge / outer peripheral surface 46 of the workpiece 20 using the first grinding wheel 14 is performed while the workpiece 20 is held (grasped) only by the first workhead 10. In another embodiment, grinding the outer peripheral surface 46 of the workpiece 20 using the first grinding wheel 14 is performed while the workpiece 20 is held only by the second workhead 12.

In another embodiment, as shown in FIG. 11, the peripheral surface 46 of workpiece 20 may be ground while being contacted by both holder assemblies 10 and 12. In some embodiments only one of the holder assemblies (e.g., workhead 10) would function to clamp (grasp with jaws) the workpiece 20, while the other merely contacts the workpiece 20 and supports the clamping operation. In other embodiments, both holder assemblies will clamp the workpiece 20, either with clamping jaws, vacuum force, or both.

In an embodiment, the first grinding wheel 14 and/or a workhead may be reoriented or moved relative to one another (e.g., grinding wheel may move along line 4-5 in FIG. 12A) for engagement/disengagement with the face 42 (or face 44) of the workpiece 20, for grinding thereof (see FIG. 12A).

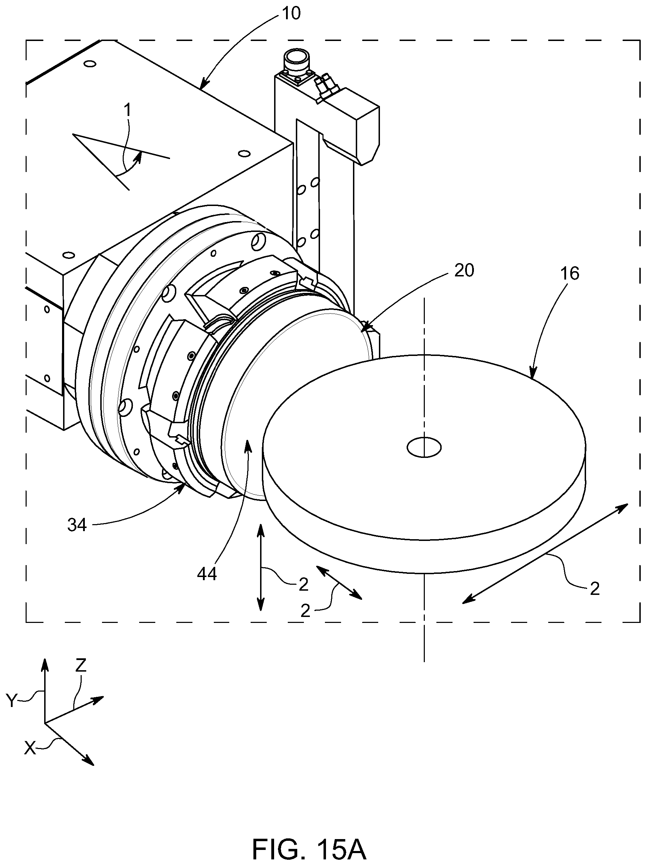

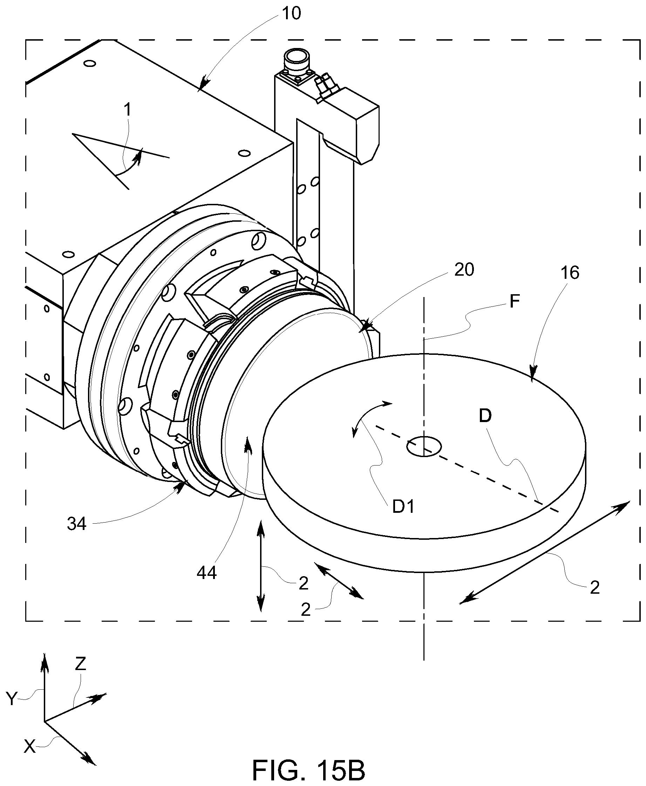

In a similar manner, in accordance with embodiments herein, the second grinding wheel 16 (see FIGS. 15, 15B, 17D) is configured for movement relative to the workpiece 20 such that its grinding edge is placed into contact, or retracted out of contact, with the face 42 or 44 of the workpiece 20. In an embodiment, the second grinding wheel 16 may be moved linearly and/or angularly towards the workpiece 20 in order to grind the face(s) 42, 44 of the workpiece 20. In one embodiment, as generally shown in FIG. 1B-1C and described hereinbelow with reference to FIG. 15A and FIG. 17D, the second grinding wheel 16 may be moved, e.g., linearly along an axis that is parallel to the horizontal axis A-A (in the Z-direction) for engagement/disengagement with one of the faces 42 and/or 44 of the workpiece 20. The second grinding wheel 16 may be configured to rotate about an axis that is parallel to the Y-axis (e.g., a vertical axis), in accordance with embodiments herein. Additionally, and/or alternatively, second grinding wheel 16 may be configured to rotate about an axis that is parallel to the X-axis (e.g., a horizontal axis), in accordance with embodiments herein. In further embodiments, the second grinding wheel 16 may be configured to rotate about axis D-D in FIG. 15B). In an embodiment, grinding of face 42 or 44 of the workpiece 20 using the second grinding wheel 16 is performed while the workpiece 20 is held by the first workhead 10. In another embodiment, grinding the face 42 or 44 of the workpiece 20 is performed while the workpiece 20 is held by the second workhead 12. Both may be part of the method of forming the workpiece 20, as noted hereinbelow. In accordance with embodiments herein, the second grinding wheel 16 is configured for rotation about the Y-axis.

According to one non-limiting embodiment, such as schematically shown in FIG. 11, the first grinding wheel 14 may be configured for rotation about a third axis C-C. According to embodiments herein, axis C-C may be provided at an angle (i.e., a non-zero angle) relative to the X-axis (or the B-B axis, shown in FIG. 11) and/or the Z-axis (or the A-A axis, shown in FIG. 12A). In other embodiments axis C-C may be parallel to horizontal axis B-B (or the X-axis) in one rotational direction for grinding the outer peripheral surface 46 of the workpiece 20. In one embodiment, at least a portion (e.g., a diaphragm) of each of the first workhead 10 and the second workhead 12 may be configured for rotation about the horizontal axis B-B (or the X-axis) in a rotational direction that is the same as or similar to the direction of rotation about axis C-C. In FIG. 11, for example, the portion (e.g., diaphragm) of the holder assemblies 10, 12 may be rotated about axis B-B (see arrows 1 in FIG. 11) turning towards the right, and the first grinding wheel 14 may be rotated about axis C-C turning towards the right as well. In another embodiment, the rotational direction about axis B-B is opposite to the direction of rotation about the C-C axis, for rotating the workpiece 20. In FIG. 11, for example, the holder assemblies 10, 12 may be rotated about axis B-B turning towards the right, whereas the first grinding wheel 14 may be rotated about axis C-C turning towards the left. However, such directions (i.e., opposite rotational directions) are not intended to be limiting. In some embodiments, the holder assemblies 10, 12 and grinding wheel(s) 14, 16 may be rotated about their respective axes in the same rotational direction with regards to the portions of the holder assemblies 10, 12 that rotate, with a change in rotational direction as needed. The rotational movement about axis B-B and/or C-C may be performed simultaneously or periodically during grinding of the outer peripheral surface 46 (or face 42 and/or 44), for example. In an embodiment, grinding the outer peripheral surface 46 of the workpiece 20 as shown in FIG. 11 includes rotating the first grinding wheel 14 rotationally in the one rotational direction and rotating the at least the portion of the first workhead 10 and/or the second workhead 12 in the same rotational direction and along a parallel axis.

In an embodiment, the first workhead 10 is configured for rotational movement about the Y-axis relative to the second grinding wheel 16, such as schematically shown in FIG. 15A, for example, during grinding of the face 42 or 44. In one embodiment, the second grinding wheel 16 is configured for rotation about the Y-axis and linear movement in the X- and/or Z-directions of such axes, relative to the workpiece 20, in order to grind the face 42 or 44 thereof. Accordingly, in an embodiment, the grinding the face 42 or 44 of the workpiece 20 comprises rotating the second grinding wheel 16 and at least linearly moving the second grinding wheel 16 relative to the face 42 or 44 of the workpiece 20.

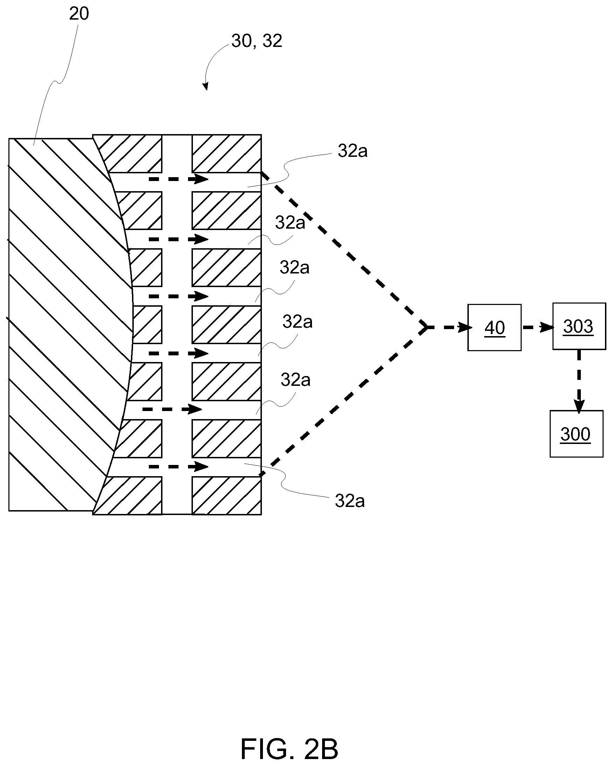

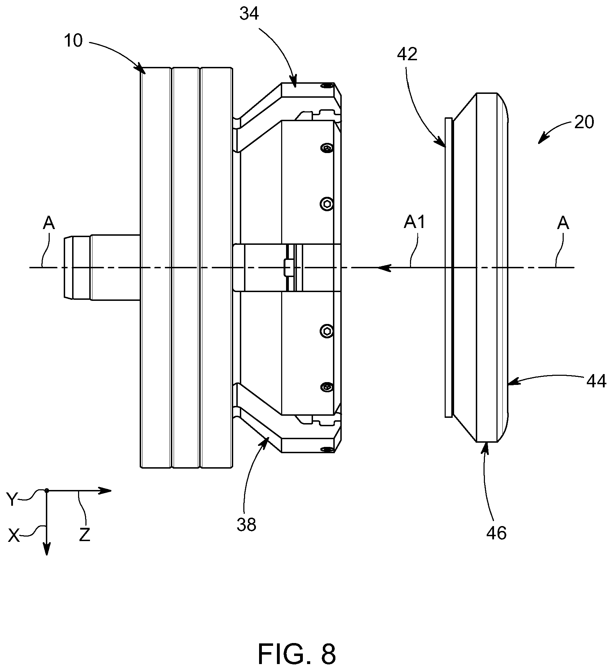

FIGS. 1A and 1B also show that, in an embodiment, also included and integrated with the machine 100 is the controller 18 and/or processor configured to control each of the subcomponents, tools, and devices, including the first and at least second holder assemblies 10, 12 and the first and at least second grinding wheels 14, 16. In addition to controlling operation and/or activation of the subcomponents, tools, etc., the controller 18 is also configured to control movement thereof (e.g., such as the directions of movement as depicted in FIG. 1C). The machine 100 also has a vacuum system 22 (e.g., see FIG 1F) associated and integrated therewith for selectively applying a vacuum force to the first workhead 10 and the second workhead 12 during processing and forming the workpiece 20. Activation of the vacuum system 22 may also be controlled via the controller 18. In an embodiment, the vacuum system 22 may comprise a first vacuum device and a second device for applying a vacuum force to the first workhead 10 and the second workhead 12, respectively. More specifically, in one or more embodiments, the vacuum device may include a vacuum pump 300 that can apply suction, so that the vacuum force that is applied to either or both the first and second holder assemblies 10, 12 may be applied to the workpiece 20 in order to hold or at least temporarily secure the workpiece 20 to the respective workhead, which is further described hereinbelow with respect to FIGS. 2-6 and the exemplary method steps illustrated in FIGS. 8-20.

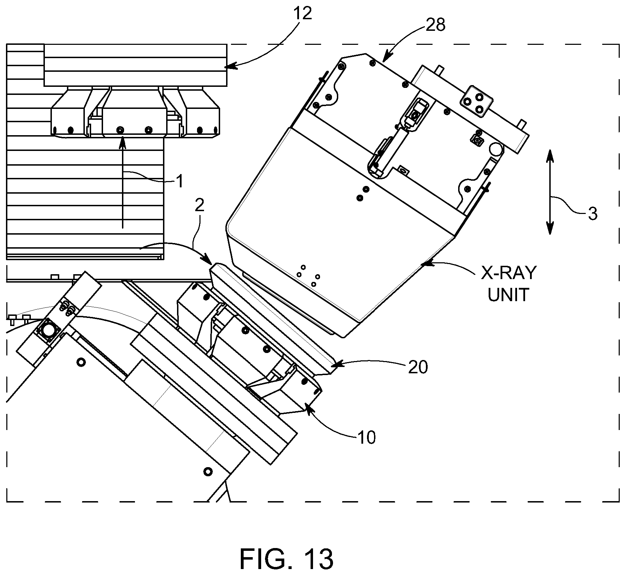

In accordance with embodiments herein, the machine 100 also includes an X-ray machine 28 (see FIGS. 1 and 13, for example) that is used to obtain X-rays of the workpiece 20 during the forming thereof. In an embodiment, the X-ray machine 28 is configured for movement relative to at least the first workhead 10 for obtaining X-rays of the workpiece 20, e.g., that is held by the first workhead 10 (but may also be used to obtain X-rays for a workpiece 20 or boule held by the second workhead, for example). The X-ray machine 28 may be periodically moved relative to the workpiece 20 and the workhead 10 or 12, or both, via the arm(s) 52 and/or tooling assembly 17 that holds it, to obtain X-ray images (see, e.g., FIGS. 1C, 1D, and 13 for exemplary movements). According to embodiments herein, the controller 18 may be configured to control timing and movement of the X-ray machine 28, as well as its operation to obtain X-ray(s) and the associated X-ray diffraction data. According to embodiments herein, the obtained X-rays and/or X-ray data may be utilized by the controller 18 in order to orient the workpiece 20 (e.g., via a first workhead 10) such that further processing (e.g., finishing, machining, grinding) may be performed on the workpiece 20. In an embodiment, the obtained X-rays are used to obtain or calculate data from said X-ray(s) (e.g., using controller / processor 18) in order to rotationally orient a face of the workpiece 20 via moving the first workhead 1210 such that there may be grinding done to the face of workpiece 20 using the second grinding wheel 16. More specifically, according to an embodiment herein, X-ray data (e.g., diffraction data) may be obtained to determine a crystal structure/orientation in the boule/workpiece 20, so that appropriate or desired compensation(s) for the structure may be initiated and performed for further machining of the workpiece 20. In non-limiting embodiments, the X-ray machine 28 may be configured to include one or more of: a rotational pivot point or a rotational mechanism, a traverse mechanism, and/or other positioning mechanisms. In an embodiment, the X-ray machine 28 is configured to move along at least a rotational axis (see FIGS. 1B-1D showing rotational arrows for the tooling assembly 17 and/or arm(s)) and a linear axis (see arrow 3 in FIG. 13) from a retracted position (e.g., as schematically shown in FIG. 1B) to a position that allows for X-rays of a front of the dome side or face of the boule or workpiece 20, such as shown in FIG. 13. According to one non-limiting embodiment, the first workhead 10 may be pivoted, swiveled, or rotated (about a Y-axis), e.g., back and forth and/or up and down, such as shown via exemplary arrow 2 in FIG. 13 to move and align a (front) face of the workpiece 20 with a reading area, window, or surface of the X-ray machine 28 before and/or during imaging. The X-ray machine 18 may move and take images at an angle (i.e., a non-zero angle) relative to the horizontal axis (B-B axis), for example. According to an embodiment, the X-ray machine 28 may be provided in the form of an XRD or X-Ray Diffraction tool to identify the crystal structure/orientation of the material (SiC). In one embodiment, the X-Ray machine 28 is used for crystallography in which the crystalline structure of the workpiece 20 causes the incident X-rays to diffract into many directions, which are then detected by a detector such as a Laue detector, CMOS, sCMOS camera, or the like, mounted on a mounting structure on any position (preferably within the enclosure) to obtain images or data that can detect crystal orientation and/or, in another embodiment, identify structural defects in the crystals of the workpiece 20.

Although FIG. 13 generally depicts the X-ray unit 28 as approaching the workpiece 20 from the face side, such approach and movement of the X-ray machine 28 and the first workhead 10 are not intended to be limiting. For example, in some embodiments, the X-ray machine 28 may be configured to move linearly with respect to an outer diameter of the workpiece 20 (i.e., parallel to axis A-A, or parallel to Z-axis).

The movements of the X-ray machine as depicted in the drawings are not intended to be limiting. And in fact, it should also be appreciated, that in another embodiment, the X-ray machine 28 may be stationary, while the holder assemblies and/or workhead holding devices disclosed herein are moved, manipulated, and oriented relative to the X-ray machine 28 to obtain the data from the workpiece 20 as desired. Any combination of such movements is also contemplated herein.

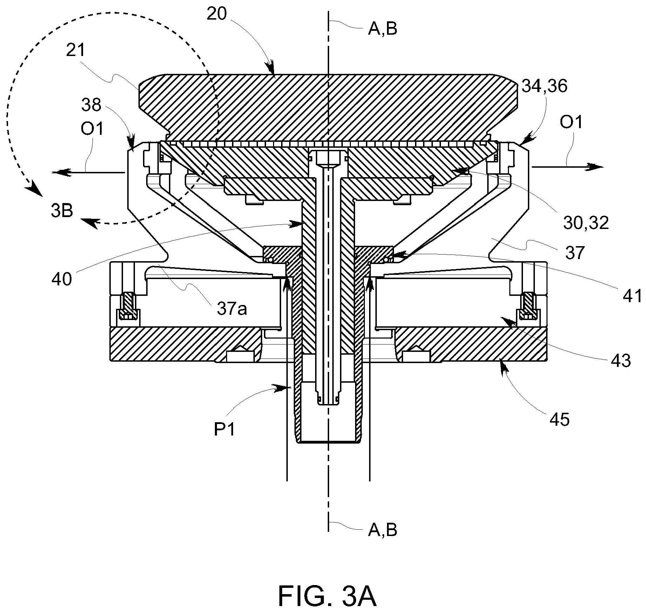

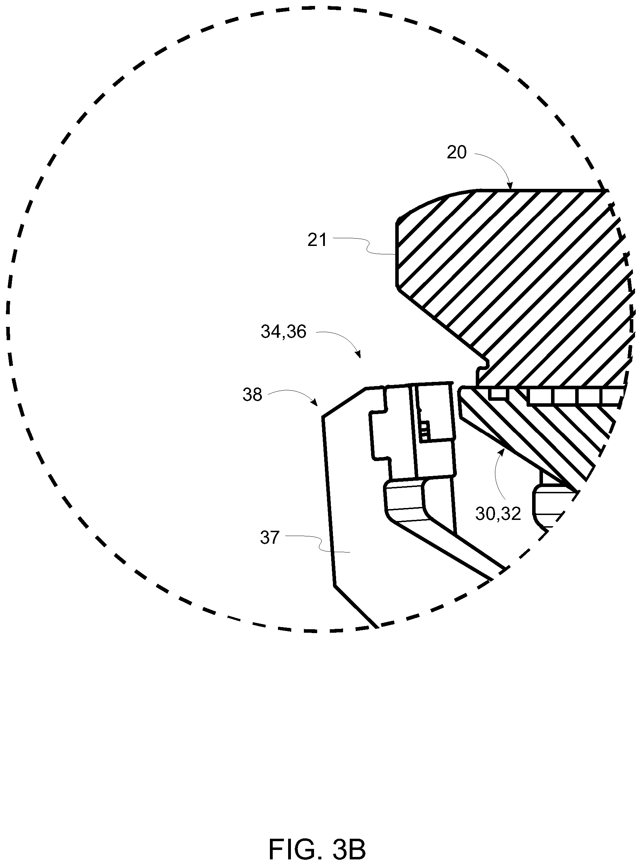

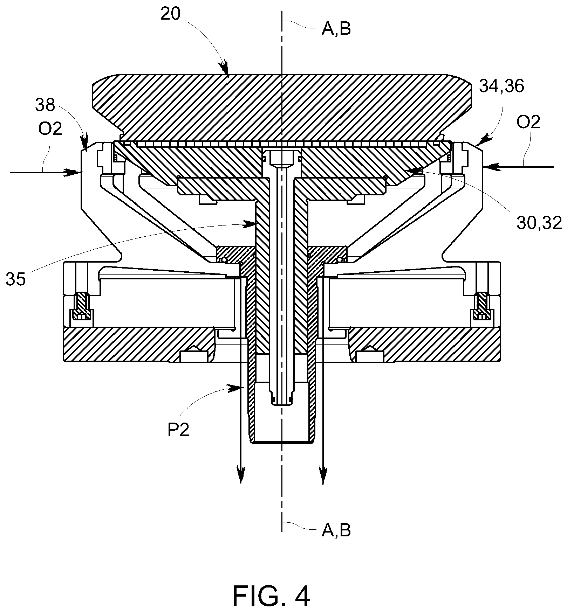

Further details regarding exemplary parts of the first workhead 10 and the second workhead 12, in accordance with embodiments herein, are shown in FIGS. 2-6. In an embodiment, the first workhead 10 has a first workpiece holding device or assembly 34. The first workpiece holding device 34 comprises a first vacuum plate 30 and a clamping mechanism 38. The vacuum plate 30 can, in one embodiment, take the form of a plate or structure having a resilient workpiece engaging surface 20A and have grooves or passages therethrough. This first vacuum plate 30 is configured for use as part of a vacuum system 22 (or a vacuum device thereof) to apply vacuum force thereto for holding the workpiece 20 once the workpiece 20 is positioned against the vacuum plate 30. In particular, as can be appreciated from FIGS. 1F and FIG 4, the first workhead 10 includes a vacuum channel 35 (extending through an actuator arm 40, described below) that communicates a vacuum pump 300 with the vacuum plate 30. The vacuum pump 300 of the vacuum system 22 communicates with the vacuum channel in the head via a vacuum line 303. In one embodiment, the vacuum pump 300 may be positioned outside the enclosure 13, while in another embodiment it may be positioned inside enclosure 13. In addition, in the illustrated embodiment a single vacuum pump 300 is illustrated, although it should be understood that a plurality of vacuum pumps 300 can be employed. In an embodiment, such as shown and described below with reference to FIGS. 3-6, the first vacuum plate 30 is configured for movement between a retracted position and an extended position. Similarly, in an embodiment, the second workhead 12 has a second workpiece holding device 36. The second workpiece holding device 36 has a second vacuum plate 32. This second vacuum plate 32 is configured for use with vacuum system 22 (or a vacuum device thereof) to apply vacuum force thereto for holding the workpiece 20 once the workpiece 20 is positioned against the vacuum plate 32. In particular, the second workhead 12 also includes a vacuum channel like channel 35 (extending through its respective actuator) that is directed to and communicates with the vacuum plate 32. In an embodiment, the second vacuum plate 32 is configured for movement between a retracted position and an extended position. Accordingly, it should be understood that loading a workpiece 20 for forming and processing includes placing the workpiece 20 onto the first workpiece holding device 34 of the first workhead 10, and that vacuum force is applied via vacuum system 22 to hold the workpiece 20. In a similar manner, e.g., during the forming method, the workpiece 20 may be transferred from the first workhead 10 to the second workhead 12 and held against the second vacuum plate 32 via vacuum force applied via vacuum system 22.

While the term "plate" herein is used in connection with the vacuum plates, it must be understood that use of this term is for convenience only, as its structure can be someone flat in one embodiment. However, the term "plate" as used and contemplated herein need not be flat and can have an irregular shape with a thickness to it. The vacuum plate is essentially just a structure that engages or contacts a workpiece or part. It can be compliant in one embodiment to conform to the shape of the workpiece and can have holes or orifices therethrough to allow a vacuum force to be applied to the workpiece.

As should be understood by one of skill in the art, each of the vacuum plates 30 and 32 may be formed based on a type of workpiece 20 that is machined/formed. In an embodiment, either or both of the vacuum plates 30, 32 may include a flexible or resilient center portion that provides compliance (or resilience) to conform to the shape of the face (e.g., face 42 or face 44) that is positioned against the respective plate. Such plates may be switched based on the type of workpiece 20 to be formed. In an embodiment, either or both of the vacuum plates 30, 32 may include grooves or holes therein that assist in providing the vacuum to the workpiece 20 (when activated). As seen in FIG. 2B, in a non-limiting embodiment, a plurality of distribution passages 32a may extend through both of the vacuum plates 30, 32 (in FIGS. 2B, 3A, 4, for example, the vacuum plates are both labeled as a convenience for understanding, although it should be appreciated that these are actually separate, as shown in FIG. 2A). Each of the plurality of distribution passages 32a is in fluid communication with the vacuum supply (vacuum pump 300) through the vacuum conduit 35 and the vacuum line 303. Accordingly, vacuum plates 30, 32 are able to distribute the vacuum force advantageously for securing and transporting the workpiece during grinding and imaging operations.

According to an embodiment, vacuum plates 30, 32 may be formed of a metal material, such as steel or aluminum, and may include a flexible material, such as a urethane, to act as an outer surface seal. In one embodiment, the flexible center portion of the vacuum plates 30, 32 may be formed from a material such as urethane to conform to a non-uniform surface of the face of the workpiece 20 / boule.

In an embodiment, each of the first workpiece holding device 34 and the second workpiece holding device 36 includes a clamping mechanism 38, or diaphragm or diaphragm chuck, such as shown in FIG. 3A. The clamping mechanism 38 of each device 34, 36 may include any number of chuck jaws 37 for clamping, e.g., six (6). In an embodiment, the clamping mechanism 38 is configured for movement between an open position (see, e.g., FIG. 3A and 3B) and a closed position (or gripping position; see, e.g., FIG. 4) for clamping and de-clamping the first vacuum plate 30 or second vacuum plate 32. FIG. 3B shows the number of chuck jaws immediately after declamping the first vacuum plate 30 or second vacuum plate 32.

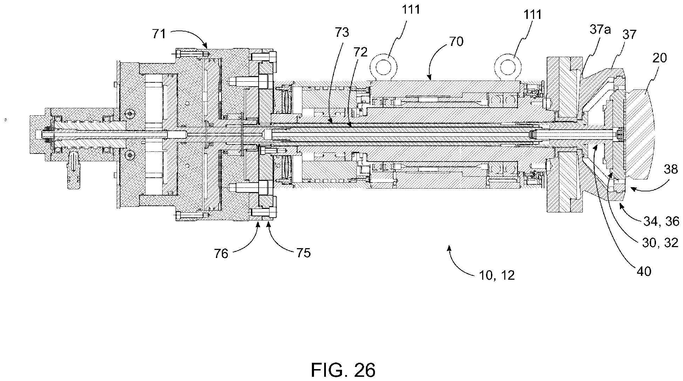

In an embodiment, the first workhead 10 and the second workhead 12 each comprise a spindle 70, a pneumatic duplex cylinder 71, an inner drawbar 72, and an outer drawbar 73, as shown in FIG. 26. The spindle 70 may be connected in between the holder assemblies 34, 36 and the pneumatic duplex cylinder 71 to enable the holder assemblies to rotate during grinding operations. The pneumatic duplex cylinder 71 is an actuation device that enables the pair of drawbars 72, 73 to be independently actuated while in a coaxial configuration. That is, the inner drawbar 72 may be sleeved by the outer drawbar 73 such that the pneumatic duplex cylinder 71 is able to selectively extend or retract the inner drawbar 72 in a first direction without hindering the outer drawbar 73 from being extended or retracted in the first direction. The inner drawbar 72 and the outer drawbar 73 may extend through the spindle 70 such that the inner drawbar 72 is connected in between the pneumatic duplex cylinder 71 and an actuator arm 40. In an embodiment, the inner drawbar 72 serves as a conduit through which a vacuum is supplied to the vacuum plates 30, 32. The outer drawbar 73 may be connected in between the pneumatic duplex cylinder 71 and a cap 41 such that displacement of the outer drawbar 73 causes jaws 73 of the clamping mechanism 38 to become opened or closed as described herein. In further embodiments, a spindle adapter 75 and a cylinder adapter 76 may be connected in between the spindle 70 and the pneumatic duplex cylinder 71 such that the spindle adapter 75 is connected between the spindle 70 and the cylinder adapter 76. Likewise, the cylinder adapter may be connected between the pneumatic duplex cylinder 71 and the spindle adapter 75.

To initiate clamping and de-clamping, the outer drawbar 73 is retracted or extended by the pneumatic duplex cylinder 71. The outer drawbar 73 provides a physical connection between the actuating pneumatic cylinder and a clamping mechanism 38. Based on the forces applied via the outer drawbar 73 (e.g., pushing force P1 or pulling force P2), the clamping mechanism or diaphragm 38 may be flexed slightly at a thinned portion 37a of the jaws 37 to thereby cause its chuck jaws 37 to open or close relative to the workpiece 20. In one embodiment, the jaws 37 are normally open, and a force applied thereto causes flexure to close them. In another embodiment, the jaws 37 are normally closed, and a force applied thereto causes flexure to open them.

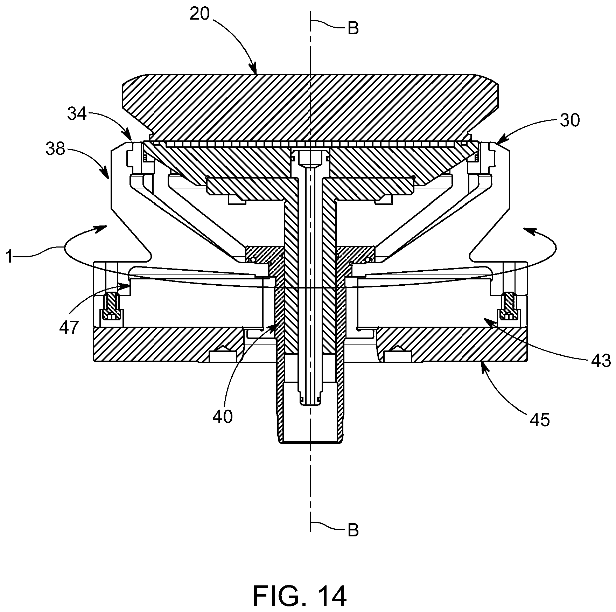

FIG. 3A illustrates exemplary parts that may be provided as part of each workhead for initiating such clamping and de-clamping. A cap 41 of the diaphragm 38 may be connected to the drawbar and provide the means of actuating the jaws 37 diaphragm 38 to open and close the chuck jaws. Adjacent to the cap 41 (shown below the cap 41 in the view of FIG. 3A) there is provided a main body 43 of the diaphragm chuck which provides a base for affixing the clamping mechanism or diaphragm 38 thereto. This main body 43 may be connected to a spindle adapter plate 45 to affix the diaphragm chuck to the workhead spindle 70 of the respective workhead 10, 12. In an embodiment, the spindle adapter plate 45 may include a centering mechanism (e.g., such as stir screws) which allows and provides centering of the diaphragm chuck 38 on the spindle 70, e.g., to provide adjustments to achieve a minimum value of radial runout. The main body 43 and spindle adapter plate 45 are configured for rotation by an electric motor of the respective drive mechanism (25A or 25B) to thereby rotate the diaphragm 38 and workpiece 20 as needed (and described hereinbelow, e.g., see FIG. 14). Further, according to embodiments herein, a clearance 47 (see FIG. 14) may be provided between a bottom portion of the diaphragm 38 and a top portion of the main body 43 in order to allow for pivoting of the jaws 37 and actuation of the diaphragm 38.

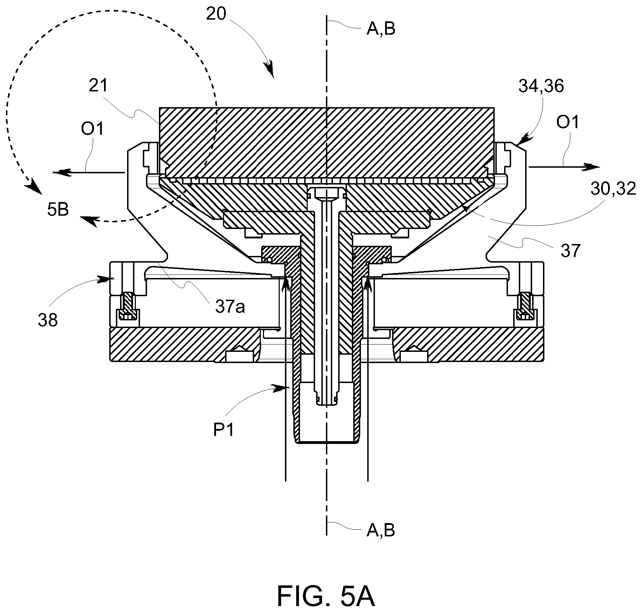

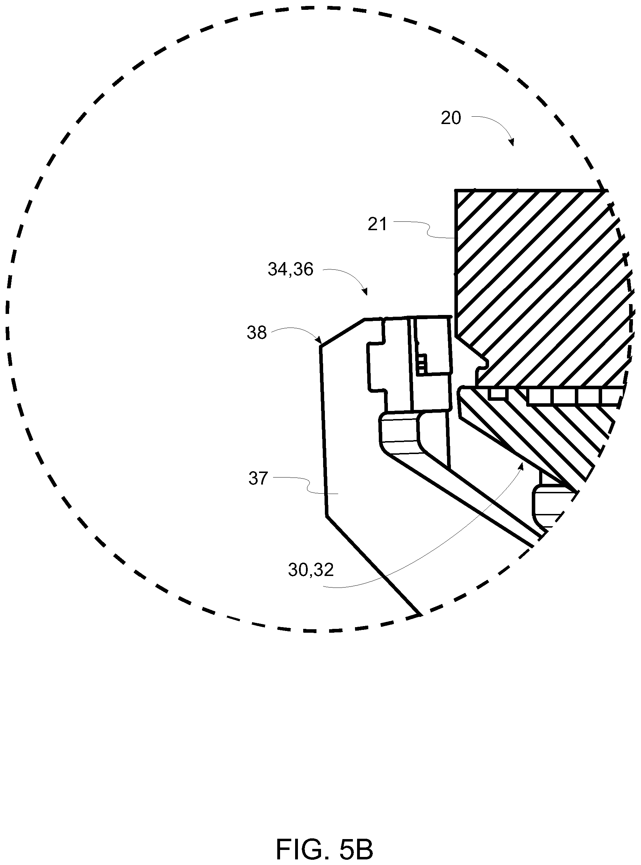

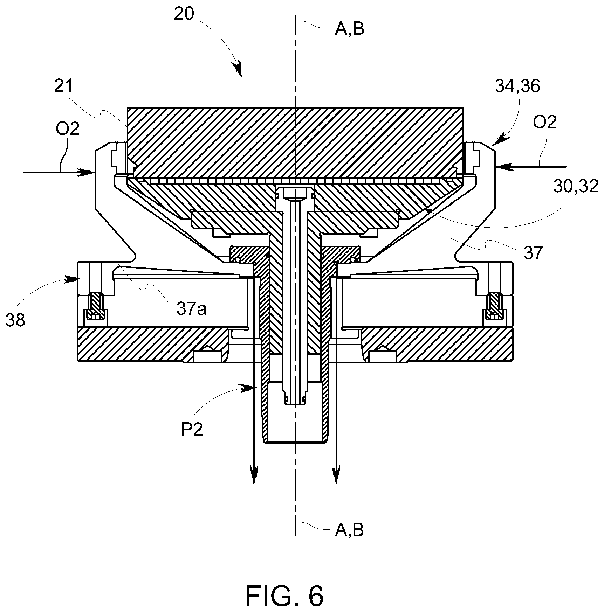

In an embodiment, each of the first vacuum plate 30 and second vacuum plate 32 is configured for movement between a retracted position (see, e.g., FIG. 5A) and an extended position (see, e.g., FIG. 3A) relative to the clamping mechanism 38, thereby retracting and extending the workpiece 20 relative to the clamping mechanism 38. In particular, FIG. 3A and FIG. 3B show an example of an extended vacuum plate 30, 32 with the diaphragm / clamping mechanism 38 in the open position (i.e., jaws 37 are away from the vacuum plate). FIG. 4 shows an example of an extended vacuum plate 30, 32 with the diaphragm / clamping mechanism 38 in the closed position (i.e., jaws 37 are in contact with and clamped around the vacuum plate to keep the jaws away from the boule periphery 21 and leave it fully exposed for peripheral grinding, while forced on the boule is applied only by vacuum and/or compressive force to the opposing holder, as will be described herein). FIGS. 5 and 5B show an example of a retracted vacuum plate 30, 32 with the diaphragm / clamping mechanism 38 in the open position (i.e., jaws are away from the workpiece 20 so that the boule is fully grasped by a single holder and its jaws 37, to permit full grinding as will also be described herein). FIG. 5B shows the number of chuck jaws immediately after declamping the first vacuum plate 30 or second vacuum plate 32. The drawbar is configured to apply a pushing force P1 to the diaphragm 38 so as to flex the chuck jaws thereof outward relative to the workpiece 20 or boule, resulting in the opening (de-clamping) of the jaws, as shown via arrows O1. FIG. 6 shows an example of a retracted vacuum plate 30, 32 with the diaphragm / clamping mechanism 38 in the closed position (i.e., jaws are in contact with and closed or clamped around an outside diameter of the workpiece 20). The drawbar is configured to apply a pulling force P2 to the diaphragm 38 so as to cause the chuck jaws 37 to pivot and thus force the clamping surfaces 37a of the jaws 37 to move radially inward relative to the workpiece 20 or boule, resulting in the closing (clamping) of the jaws, as shown via arrows O2.

To move the vacuum plates 30, 32 relative to their respective clamping mechanisms 38, in accordance with an embodiment, each workhead 10, 12 may further include an actuator 40 in the form of an arm (also noted as an "actuator arm" throughout) that is connected to the respective vacuum plate 30, 32. In an exemplary embodiment, for example, each vacuum plate 30, 32 may be fastened or bolted to its respective actuator arm 40. The actuator 40 of each workhead 10, 12 is configured to selectively move the respective vacuum plate 30, 32 and the workpiece 20 attached thereto between the retracted position and the extended position. The actuator arm 40 may move within and with respect to the cap 41 associated with the diaphragm 38. As understood by one of skill in the art, the arm of the actuator 40 may be moved via a motor, for example (which may be an electric motor, and may optionally be a part of the driving mechanism of the respective workhead 10, 12. The direction of movement of the actuator 40 and thus the vacuum plate 30, 32 relative to the clamping mechanism or diaphragm 38 is dependent upon the workhead 10 and its position (e.g., positioned along the A-A axis or the B-B axis, for example).

As can be understood by the above description, the machine 100 herein is configured to perform a method for forming a workpiece 20. As described below, this method includes, for example, loading the workpiece 20 onto the first workhead 10, relatively positioning the workpiece 20 with respect to the second workhead 12 so that the workpiece 20 is in contact with both the first workhead 10 and the second workhead 12, grinding an outer peripheral surface 46 of the workpiece 20 in contact with the first workhead 10 and the second workhead 12 using the first grinding wheel 14, grinding a face 42, 44 of the workpiece 20 using a second grinding wheel 16, and unloading the workpiece 20. More specifically, FIGS. 8-20 illustrate exemplary (and optional) steps for forming the workpiece 20 using the machine 100 of FIG. 1A.

As shown in FIG. 8, in accordance with an embodiment, the workpiece 20 may be first loaded onto the holder assembly 34 of first workhead 10, as represented by arrow A1. For example, an operator may manually hold a seed side 42 of the workpiece 20 against the vacuum plate 30 of the first workhead 10. Thus, the dome side or face 44 is positioned to face outwardly and away from the first vacuum plate 30. In this loading position of FIG. 8, the first workhead 10 is set for loading along the A-A axis (or Z axis), the vacuum is applied to the first vacuum plate 30, the first vacuum plate 30 is extended, and the clamping mechanism 38 is optionally clamped around the first vacuum plate 30. Also, the second workhead 12 is in a load position positioned along axis B-B (or X axis), the vacuum to the second workhead 12 is off, the second vacuum plate 32 is extended, and the clamping mechanism 38 is optionally clamped in a clamp position around the second vacuum plate 32.

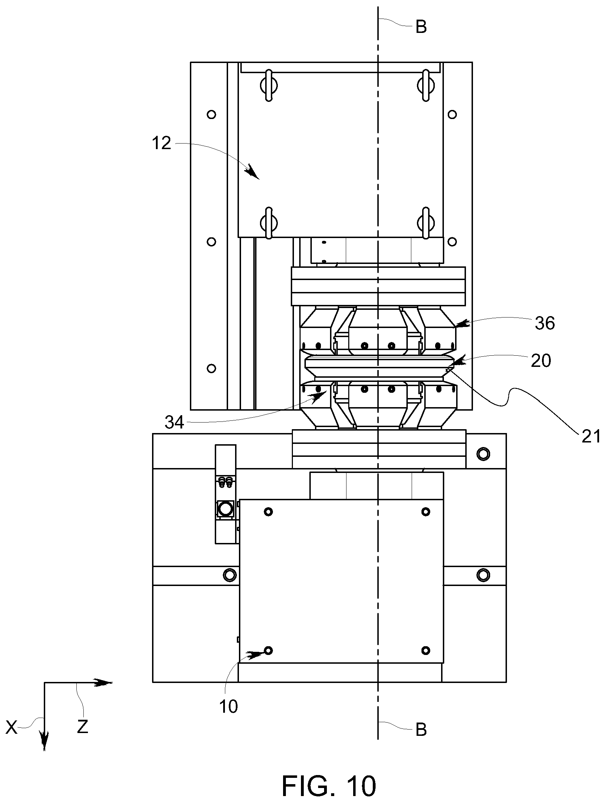

FIG. 9 shows a second step in the disclosed method. The first workhead 10 is rotated (as represented by arrow A2) about the Y-axis from its loading or horizonal position (along axis A-A) to a second horizontal position. In the illustration, knowing that an overhead view is shown, it should be understood that the first workhead 10 is rotated horizontally towards the second workhead 12. After rotation, the first workhead 10 is moved horizontally along the B-B (or X) axis, and/or the second workhead 12 is moved horizontally about the same axis (see arrow A3), towards the workpiece 20. Accordingly, the second workhead 12 may apply pressure to the dome side 44 of the workpiece 20, as shown in FIG. 10, to hold or secure the workpiece 20 between the two holder assemblies 10, and 12.

In one embodiment, the vacuum force alone, and/or the pressure applied to the boule, is sufficient to secure the boule 20 without the jaws 37 of the clamping mechanism 38 being utilized. Once secured, in accordance with an embodiment, the first and second holders 34 and 36 are rotated, to facilitate a grinding operation, such as shown in FIG. 11. In accordance with one embodiment, the first and second diaphragms holders 34 and 36 are rotated about the second axis (B-B axis) in a first direction. The first grinding wheel 14 is moved into contact with outer peripheral surface 46 of the workpiece 20 being held between the first workhead 10 and the second workhead 12. The first grinding wheel 14 may provide a rough grind to the outer peripheral surface 46 of the workpiece 20 by way of rotation about an axis C-C. In an embodiment, the first grinding wheel 14 is rotated about an axis C-C that is parallel to the axis B-B. Accordingly, FIG. 11 shows a step wherein both the first workhead 10 and the second workhead 12 are in a grinding configuration. In this configuration, the vacuum to the first vacuum plate 30 is on, the vacuum to the second vacuum plate 32 is off, and both of the first vacuum plate 30 and second vacuum plate 32 are in an extended position. Further, both of the first diaphragm 38 and the second diaphragm 38 may optionally be in a clamped position around their respective vacuum plates. After grinding the outer peripheral surface 46 of the workpiece 20, the first grinding wheel 14 is configured for movement away from the workpiece 20, e.g., linear movement in a horizonal direction parallel to the Z-axis. It should be understood that in accordance with an embodiment the first grinding wheel 14 is provided on a spindle 8a that is rotated by motor 402, and that the first grinding wheel 14 is configured for linear movement towards and away from the workpiece 20 by motor system 4, in a horizonal direction parallel to the Z-axis.

FIG. 12A shows an optional grinding operation for grinding a dome side of the second face 44 (e.g., dome side) of the workpiece 20, in accordance with an embodiment. The operation shown in FIG. 12A may be performed before use of the X-ray machine 28, for example, according to an embodiment, but is not limited with regards to when it is implemented in the method or process. Such an operation may be performed, for example, if the dome face is determined (e.g., via inspection, visually or via tools) to be not clean enough and requires slightly further grinding of the dome face prior to a first X-ray measurement. However, this operation is not limited to such requirements and may be performed as desired. In this optional step, a grinding operation of at least part of the face 44 of the workpiece 20 may take place via withdrawing (if needed) the second workhead 12 linearly along X-axis (see arrow 1) and away from the workpiece 20 being held by the first workhead 10, and rotating the first workhead 10 about the Y-axis from the second horizontal position (in line with the second workhead 12 along axis B-B) to its loading or horizonal position along axis A-A, as indicated by arrow 2. In the illustration, knowing that an overhead view is shown, it should be understood that the first workhead 10 is rotated horizontally away from the second workhead 12. The first grinding wheel 14 may be moved, e.g., at least linearly as indicated via arrow 4-5, into place to contact the face 44 of the workpiece 20, which is held by the first workhead 10, as shown in FIG. 12A. The diaphragm 38 of the workpiece holder assembly 34 is rotated about axis A-A, as represented via arrow 3, to implement the grinding operation. In accordance with one embodiment, the diaphragm 38 is rotated about the axis A-A in a first direction. The first grinding wheel 14 may be rotated about C-C in a second direction that is opposite to the first direction, according to non-limiting embodiments herein. The first grinding wheel 14 may also configured for linear movement along axis C-C, as indicated by arrow 9 during rotation thereof, along with linear movement along A-A (per arrow 4-5) in order to move into and maintain contact with the face 44 of the workpiece 20. Accordingly, the first grinding wheel 14 may provide a rough grind to the face 44 of the workpiece 20. In an embodiment, the first grinding wheel 14 is rotated about an axis C-C that is parallel to the axis B-B. After grinding the face 44 of the workpiece 20, the first grinding wheel 14 is configured for movement away from the workpiece 20, e.g., via at least linear movement in a horizonal direction parallel to the A-A axis or Z-axis, and the first workhead 10 may be rotated back about Y-axis towards the second workhead 12 to align therewith.

However, as previously noted the operation in FIG. 12A is optional and need not be implemented before X-ray. Moreover, the holder assemblies and/or wheels may be configured for additional movements, including pivoting / swiveling, as needed or desired.

It should be appreciated that the first workpiece holder assembly 34 and the second workpiece holder assembly 36 provide a combination of both structural clamping (e.g., via jaws 37) as well as vacuum clamping (e.g., via the associated vacuum plates and the associated vacuum lines and pump). This combination of structural and vacuum clamping is suitable for many different applications for handling workpieces of different types, materials, and shapes, such as irregularly shaped metal parts that may be used in automotive, aerospace, and tooling industries.

FIG. 13 shows an additional step of the machining process as disclosed herein, in accordance with embodiments herein. In one non-limiting embodiment, the X-ray machine 28 may be utilized after the grinding the edge / outer peripheral surface of the workpiece 20 and before the grinding the face of the workpiece 20. In other embodiments, the X-ray machine 28 may be utilized as a step at any time during the process, including one or more times, to provide readings of parts of the workpiece 20. In FIG. 13, the second workhead 12 may be optionally retracted linearly away (see arrow 1 in FIG. 13) from the workpiece 20 that is held by the first workhead 10. The x-ray machine 28 is configured for movement towards the workpiece 20. The X-ray machine 28 may be moved linearly (see arrow 3), for example towards the surface / face 44 of the workpiece 20, and/or rotated or pivoted as needed via associated mechanisms. Optionally, as previously noted, the first workhead 10 may be pivoted, swiveled, or rotated about the Y-axis towards the X-ray machine 28 (see arrow 2 in FIG. 13) to align a (front) face of the workpiece 20 with a reading area, window, or surface thereof, according to one non-limiting embodiment, before and/or during use of the machine 28. Accordingly, the X-ray machine 28 is configured to obtain x-ray images of at least the dome face 44 of the workpiece 20 in accordance with an embodiment. In embodiments, the X-ray machine 28 is configured to obtain x-ray images of any surface (e.g., faces 42, 44 and/or surface 46) of the workpiece 20. The images obtained by the X-ray machine are used (e.g., via controller 18, including a computer, data processor, etc.) to identify structural features (e.g., data corresponding to a crystal structure/orientation) of the workpiece 20 thus far in the process/method. Such images and determined/calculated data allow for clarification and orientation of the workpiece 20 for further processing. For example, as understood in the art, the crystal lattice of the workpiece 20 (boule) typically needs to be in a particular orientation in order to correct any concerns and or deficiencies on the surface(s) / at least face 44 of the workpiece 20. As shown with regards to the exemplary illustrative embodiment of FIG. 14, then, the first diaphragm 38 of the first workhead 10 may be rotated (e.g., when placed in and about axis B-B; see arrow 1 in FIG. 14), in accordance with embodiments herein, as a result of the obtained X-ray(s) and data, in order to achieve a desired orientation for the workpiece 20 for the next operation. In FIG. 14, the workpiece 20 (and thus the first vacuum plate 30) is in a retracted position. That is, in order to rotate the workpiece 20, the first vacuum plate 30 is moved from an extended position as shown in FIGS. 3 and 13 into its retracted position. The main body 43 and spindle adapter plate 45, and thus the diaphragm 38 and workpiece 20, may be rotated via the workhead spindle 70 and an electric motor of the drive mechanism 25A of the workhead 10.

FIG. 15A illustrates an example of using the second grinding wheel 16 on the workpiece 20, in accordance with embodiments herein. The workpiece 20 is held by the first workhead 10, with the vacuum on, and the first vacuum plate 30 being maintained in a retracted position, with the first diaphragm 38 remaining in the clamped position about at least the first vacuum plate 30. In some instances, the chuck jaws of the diaphragm 38 may clamp an outer peripheral surface / edge of the workpiece 20. The second grinding wheel 16 is moved into contact with the face 44 of the workpiece 20. The first workhead 10 is moved horizontally, linearly, pivotally, on a swivel, and/or rotationally in order to angle the face 44 relative to the second grinding wheel 16 for grinding thereof. For example, rotational movement of the first workhead 10 may include rotating about the X-axis itself and/or pivoting (swiveling) at an angle relative to the X-axis (e.g., one example being indicated by arrow 1 in FIG. 15A) to swivel the face 44 of the workpiece 20 back and forth and/or up and down, e.g., relative to the second grinding wheel 16. The second grinding wheel 16 is configured for movement rotationally and linearly. In particular, the second grinding wheel 16 is configured to rotate about the Y-axis, linearly moves about the Y-axis, and/or laterally move parallel to the A-A axis (or along the Z axis). FIG. 15B shows an alternative variant to the one described above. It differs in the orientation of the grinding wheel's axis of rotation, which is horizontal (parallel to X-axis, or Z-axis) and not vertical (parallel to Y-Axis). The grinding process is different as the side edge of the grinding wheel 16, and not the circumferential face is in use to grind face 44 of the workpiece 20. This side edge wheel can be designed as a cup wheel. For variant FIG. 15B typically no vertical positioning of the grinding wheel 16 is needed (see vertical arrow 2, parallel to Y, in FIG. 15B).

According to embodiments herein, prior to the exemplary operation shown in FIG. 15A as described above, the first workhead 10 may be positioned - e.g., to position the dome face 44 of the workpiece 20 - at and/or to a specific orientation and/or position along the axes to a fixed position for grinding based on data resulting via the obtained x-rays by the X-ray machine 28 (including as determined, calculated, collected, etc., including via processing using the processor/controller 18). That is, the data may be utilized to position the crystalline structure/lattice of the workpiece 20 in a particular position and/or orientation via the first workhead 10 before - and/or during - the grinding operation of FIG. 15A. The first workhead 10 may also be configured, during a grinding operation like that of FIG. 15A, for example, to pivot / swivel.

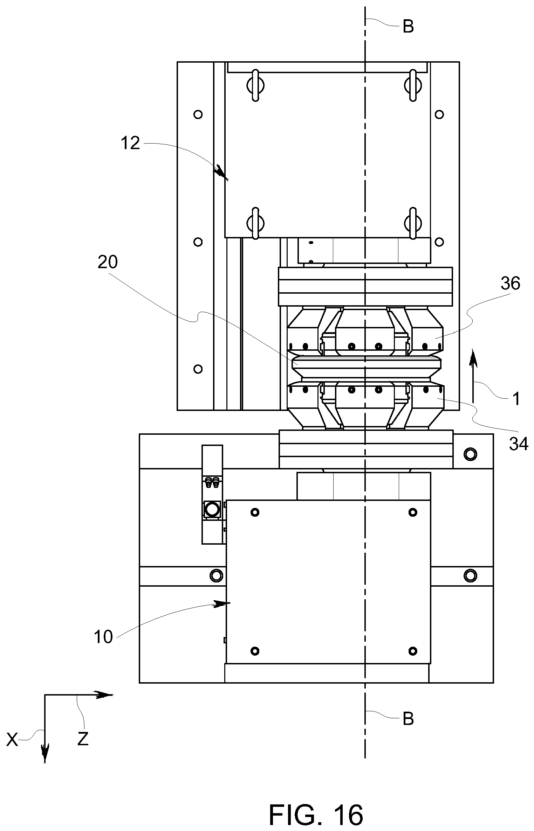

As shown in FIG. 16, the workpiece 20 may be transferred to the second workhead 12 from the first workhead 10, in accordance with an embodiment. In accordance with a non-limiting embodiment, the operation of FIG. 16 may be performed after grinding of the face 44 of the workpiece 20, i.e., the workpiece 20 may be transferred to the second workhead 12 after use of the second grinding wheel 16. However, if the grinding wheel 16 is not utilized, the transfer of FIG. 16 may take place after use of the X-ray machine 28 as shown in FIG. 13 and/or correction as shown in FIG. 14. Specifically, as needed, the first workhead 10 may be moved towards the second workhead 12 along the X or B-B axis, or alternatively the second workhead 12 may be moved towards the first workhead 10. The first workhead 10 is configured to transfer or hand off the workpiece 20 to the second workhead 12 by stopping the vacuum applied to the first workhead 10 and extending the first vacuum plate 30 into the extended position. The second workhead 12 applies a vacuum to the workpiece 20, with the second vacuum plate 32 provided in the extended position. The first diaphragm and the second diaphragm both remain in the clamped positions about their respective vacuum plates.

Optionally, in accordance with embodiments as shown in FIGS. 17A, 17B, and/or 17C, a second and/or other grinding step(s) may be performed on the outer peripheral surface 46 of the workpiece 20. In an embodiment, any of the steps shown in FIGS. 17A, 17B, and/or 17C may be performed after the operation or step shown in FIG. 16. In an embodiment, any of the steps shown in FIGS. 17A, 17B, and/or 17C may be performed in addition to, after or before, the operations or steps shown in FIGS. 11, 12, and/or 15. For example, with regards to FIG. 17A, the first workhead 10 may be retracted away from the second workhead 12. As shown, the first grinding wheel 14 may be moved (relative or parallel to the Z-axis, as noted via the arrow) into contact with outer peripheral surface 46 of the workpiece 20 being held by the second workhead 12. As similarly explained above with regards to FIG. 11, for example, in this step, grinding may be applied in order to finish the grinding of the outer peripheral surface 46 on the workpiece, e.g., via rotating the second workhead 12 about axis B-B (see arrow 1 in FIG. 17a). FIG. 17B shows an example of the relative rotation of the first grinding wheel 14, as well as its capability of linear movement (in both the Z-axis (see arrow 2 in FIG. 17B), as well as the X-axis, as previously described), with regards to the workpiece 20. In an embodiment, the first grinding wheel 14 may be configured to grind the outer peripheral surface 46 of the workpiece 20 such that it is substantially flat. In another embodiment, the second grinding wheel 16 or another device may be configured for linear movement to grind or machine the outer peripheral surface 46 of the workpiece 20 such that it forms a notch within the outer peripheral surface 46 of the workpiece 20 (as required, e.g., by a customer, and in a particular location). FIG. 17D shows an example of the relative linear movement, with regards to the workpiece 20, for adding one or more notches into the outer peripheral surface 46 of the workpiece 20 being held by the second workhead 12, using an exemplary notch grinding wheel, for example. Such a notch grinding wheel may be configured for movement and rotation like wheels 14 and/or 16, for example, as previously described. That is, the notch grinding wheel may be a tool that is configured for linear movement with regards to a workhead / workpiece 20 for selective engagement therewith and actuated for movement via an arm and rotation about a spindle or shaft via a motor, for example. The notch grinding wheel may move linearly along the X-axis and Z-axis for selective engagement with the workpiece 20 for adding notch(es) to the outer peripheral surface 46 and during operation thereof (e.g., back and forth relative to the workpiece 20), and rotate about the Y-axis, according to a non-limiting embodiment. Of course, it should be understood that any of the operations shown in FIGS. 17A-17D may be performed when the workpiece 20 is held by the first workhead 10 also, and not necessarily limited to being held by the second workhead 12.

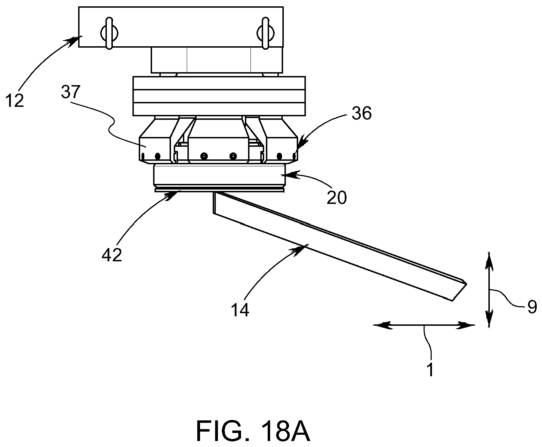

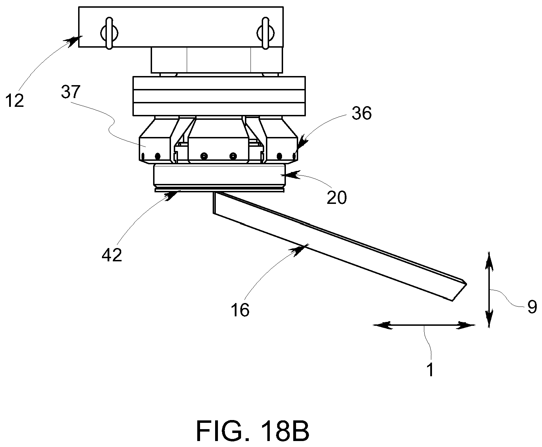

Also optionally, as shown in FIG. 18A, the first grinding wheel 14 may (again) be used to grind a face of the workpiece 20. In this case, as the workpiece 20 has been transferred to the second workhead 12 such that the dome face 44 is positioned against the second vacuum plate 32, the seed face 42 is exposed and positioned outwardly. Thus, the seed face 42 of the workpiece 20 may be ground. In another embodiment, the second grinding wheel 16, may instead be used to grind the seed face 42, as shown in FIG. 18B.

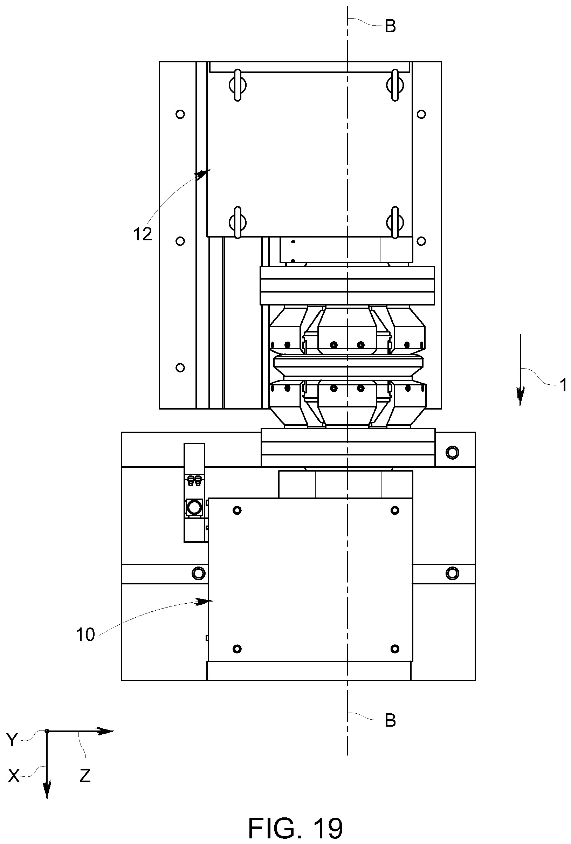

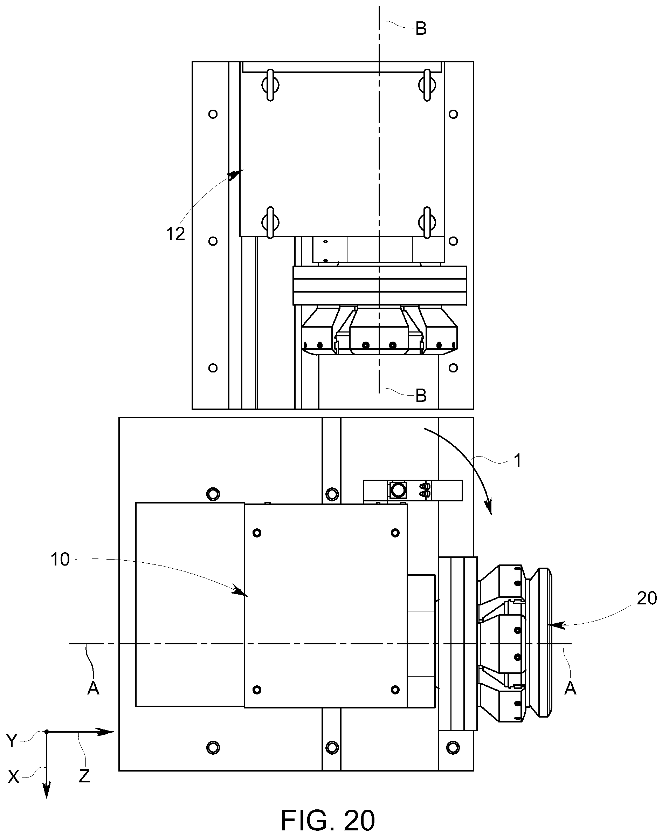

The second workhead 12 may (optionally) transfer or hand off the workpiece 20 back to the first workhead 10, in accordance with an embodiment. In one embodiment, the hand off may be performed after any and/or all grinding operations (e.g., shown in FIGS. 17A, 17B, 17C, 17D, and/or 18) on the workpiece 20 are complete when held by the second workhead 12. As shown in FIG. 19, the workpiece 20 may be moved (see arrow 1 in FIG. 19) to the first workhead 10 first by extending the vacuum plates 30, 32 of each workhead 10, 12, turning off the vacuum of the second workhead 12, and turning on the vacuum of the first workhead 10. Thereafter, as shown in FIG. 20, the first workhead 10 may be returned to its original or loading position. Specifically, the first workhead 10 may be rotated (see arrow 1 in FIG. 20) about the Y-axis horizontally to the load position, i.e., such that first workhead 10 is aligned along axis A-A. Thereafter, the vacuum is turned off to the first workhead 10 and the vacuum plate 30 remains extended. An operator may then remove the workpiece 20 as or after the vacuum is turned off.

Alternatively, in an embodiment, the workpiece 20 may be unloaded from the second workhead 12 after all grinding operations are performed.

As previously noted, the operation of parts and components of the herein disclosed machine 100 may be coordinated by controller 18 and/or processor, which is configured to bi-directionally communicate with each of the components and transmit data therebetween, including instructions for performing operations and steps as described herein with regards to the method and machine 100, and coordinating their operation to provide the noted functionalities. Controller 18 may be formed by one or more processors or computers, for example (see, e.g., computer 11 in FIG. 1A). The controller 18 may be a CNC controller. The machine parts that are controlled via controller 18 include, for example, first and second holder assemblies 10, 12, first and second grinding wheels 14, 16, vacuum system 22, X-ray machine 28, and the diaphragms 38 (or jaws), actuator arms 40 of the holder assemblies, the frame subassembly 52 and the workhead subassembly 54 including the previously described movements as well as the functional operations thereof. Controller 18 may be configured to direct the operation of components 10, 12, 14, 16, 22, 28, 38, 52, 54, and/or 40 by software; hardware; firmware; some combination of software, hardware, or firmware; a plurality of environmental sensors, or other mechanisms for configuring processing capabilities. It should also be appreciated that for the purposes of this disclosure, the term controller (e.g., the controller 18) can constitute a single processor, or a plurality of processors that operate together to provide the required functionality. In accordance with the present disclosure, it should be understood that in instances where the X-ray machine 28 or any other components disclosed herein takes or is "instructed" to take action, such action can be controlled by the controller 18

In accordance with the present disclosure, in some embodiments, the first grinding wheel 14 is used for coarse or rough grinding and has a cylindrical grinding surface that runs parallel to (and surrounding) the wheel's rotational axis, while the second grinding wheel 16 is used for surface correction of the originally domed sided of the boule surface and has an angled grinding surface (e.g., 55 degrees or 65 degrees relative to the rotational axis).

To begin an operation, vacuum is applied by vacuum system 22, via pump 300, line 303 and opening 35, to the first workpiece holding device 34.

The flat (seed side) of the boule 20 can be manually or robotically placed in contact with the first vacuum plate 30 and subsequently held in place by application of vacuum force by vacuum system 22.

Motor 204 then rotates first workhead 10 about axis C1 so that the first holder assembly 34 axis A-A is aligned with axis C2 (or B-B) so that it faces the second workhead 12.

Motor 304 linearly moves second workhead 12 along the Z2 direction (along axis B-B) so that the second holder assembly 36 moves toward the first holder assembly 34, while boule 20 is vacuum attached to first vacuum plate 30 (no use of jaws 37 to clamp the boule 20 at this point)

Second holder assembly 36 is moved so that the vacuum plate thereof engages the curved, domed or irregularly shaped side of the boule 20. In one embodiment, the vacuum plate 32 of the second workhead 12 has a thickness and resiliency sufficient to accommodate and conform to the shape of the domed surface of the boule 20 so that surface area contact therebetween is increased by the corresponding shapes. Thus, contacting force (without any use of vacuum necessary) applied by moving the vacuum plate 32 against the dome side, combined with vacuum force applied by vacuum plate 30 on the seed side of the boule 20 secure the boule therebetween. In another optional embodiment, a vacuum force is applied to the dome side as well, via the vacuum plate 32. In one embodiment, jaws 37 of neither holder assembly 34 or 36 are engaged, but instead, only vacuum forces and/or compressive forces are applied to opposite sides of the boule 20, which is sandwiched between the holder assemblies 34 and 36. Because jaws 37 are not engaged, the entire periphery 21 is exposed and available for grinding by the grinding wheel 14 or 16.

The holder assemblies 34 and 36 are then rotated together in unison by their respective rotational motors 202 and 302 to enable the periphery 21 of the boule 20 to be ground by one of the grinding wheels 14 or 16 (and perhaps most typically the first grinding wheel 14 at this point to facilitate a coarse grinding operation of the periphery, unless a finer grinding at this point is desired).

The vacuum and/or compressive forces applied to the opposite face (seed and dome) surfaces of the boule 20 are sufficient to substantially inhibit or prevent and/or wobbling rotation of the boule 20 relative to the holder assemblies 34 or 36 during the grinding operation, which would otherwise tend to rotate the boule.

After the boule periphery is ground so as to provide the boule with a generally cylindrical peripheral surface, the vacuum force applied by vacuum system 22 to second vacuum plate 32 is discontinued, while vacuumed force continues to be applied to first vacuum plate 30, and then the second holder assembly 36 is moved by the linear motor 304 away from the first holder assembly 34.

Motor 204 then rotates the first workhead 10 about axis C1 so that the now ground dome face of the boule 20 is flat (planar) and faces in a direction towards the tool assembly 17.

Jaws 37 of the first holder assembly 34 are then moved inwardly to engage around peripheral surface 21 of the boule 20.

A grinding wheel on the tool assembly 17, e.g., the same wheel 14 or 16 used to grind the peripheral surface 21, is then moved towards the domed or irregularly shaped surface of the boule 20, and performs a grinding operation so as to flatten the domed face such that it is substantially parallel to the seed side (or face).

The tool assembly 17 is then moved so that the X-ray machine 28 thereof is moved by motor linear motors 6 (along linear axes) and rotational motor 6a (see rotation around arrow B1) so that it faces and is in close proximity to the newly ground domed surface (which is now flat).

The tool assembly 17 actuates the motors 6 and/or 6a as needed to move the X-ray machine 28 towards the flat ground face surface of the boule 20 to determine a crystal orientation within the boule.

The X-ray machine feeds X-ray data to the computer system 18, which determines the orientation of crystals relative to the ground face surface of the boule.

In the event X-ray data determines that the ground face is not oriented correctly with respect to the crystal orientation (e.g., it is typically preferred for the crystalline structure to be oriented at about a 4-degree angle relative to the central axis that is perpendicular to the ground flat face), then a surface correction procedure will take place to further grind the dome side of the boule 20.

The boule 20 itself is grown with a specific crystal orientation, often aligned along a certain axis for intended electrical or mechanical properties. Crystal orientation in a semiconductor wafer refers to the alignment of the crystal lattice in relation to a geometric plane, typically denoted by Miller indices (e.g., (100), (110), or (111)). The orientation can impact the wafer's electrical and mechanical properties. For instance, different orientations can affect electron mobility, which can be important for some applications such as high-speed transistors or LEDs.

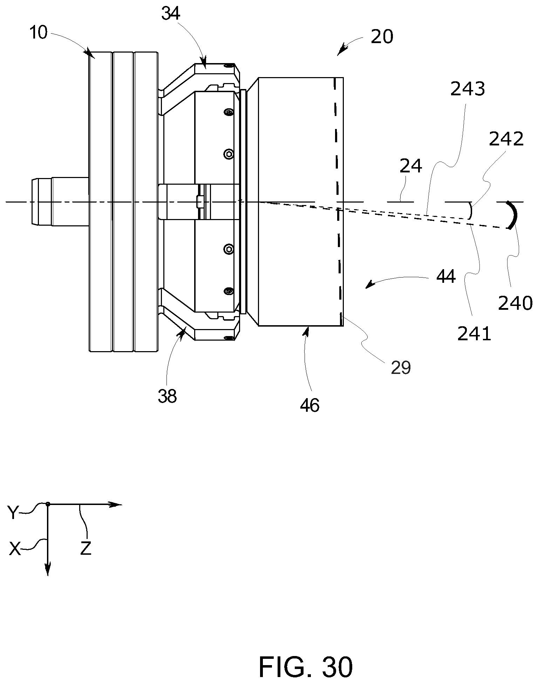

As shown in FIGS. 30 - 32, after the ingot or boule is grown, it's often ground into a "hockey puck" like structure or "puck." When grinding the flat face (e.g., dome face 44), a slight angle-often around 4 degrees-is introduced relative to a primary crystal axis 24. This is known as the "off-angle" 240. The purpose of this off-angle 240 is to optimize specific characteristics of the devices to be fabricated on the wafer, such as reducing defects or improving the performance of electronic or optoelectronic devices.

How close to the desired crystal orientation (e.g., 4 degrees) that the epitaxial layers will be grown/deposited after griding can determine the quality of epitaxial layers and can have positive effects on parameters like electron mobility. This slight angle tuning can have a significant impact on the end application, whether it's high-speed electronics, LEDs, or solar cells. Therefore, the off-angle 240 isn't just a random choice; it's a calculated decision based on the desired device characteristics.

For a "hockey puck-shaped" boule with a flat face 44, if you draw a straight line perpendicular to the base, representing a primary crystal axis 24, a 4-degree "off-angle" 240 would be represented as a second line deviating slightly from the first line, forming a 4-degree angle between them. This second line represents the direction in which the epitaxial layers will be deposited on the wafer. The 4-degree angle is one commonly selected orientation (although others can be used as well) to optimize specific properties in the semiconductor devices that will be created later.

For boule face correction, the tool assembly 17 is maneuvered by motors 6 and 6a such that a second (angled periphery) grinding wheel 16 (mounted on a spindle with an axis of rotation angled or perpendicular to the previously mentioned grinding wheels) is moved into engagement with the ground face 44, while the jaws 37 of the first holder 34 grip the periphery 21 of the boule 20 to secure it from movement or rotation.

Precise positioning and movement of the second grinding wheel 16 on the tool assembly 17 and first head 10 are precisely known by optical encoders 120 that optically determine the precise positions of the various machine components and the boule 20 surface. Specifically, high resolution optical encoders 120 for movement of components on all axes (e.g., CNC axes) on the machine 100. These include both linear encoders for all linear axes (X, Z, Y, and Z2) as well as rotary encoders for rotary axes (B1, B2, C1, and C2) or rotary movement. These optical encoders 120 provide accurate closed-loop positioning feedback to computer system 18. These closed-loop optical encoders 120 work closely with the CNC controls and sensors to provide both superior positioning and repeatability accuracies which support achieving high precision part accuracies. Further, in another embodiment, rotary, linear, and/or position encoders 120 may be used. Such other types of encoders 120 are additionally or alternatively (with respect to the aforementioned optical encoders) positioned with respect to all the axes of movement within the machine (e.g., including but not limited to being positioned on or connected with all motors, such as the motors 6 and 6a). The encoders 120 that may be used here provide position information to the processor(s) within the computer system, to provide information on the precise locations of the jaws, grinding wheels, and motor system. These encoders 120 feed position data into the computer system 18, which in turn controls the associated motors of the holder assemblies 10 and 12, their associated components, and the motors of the tool assembly 17, and its associated components.

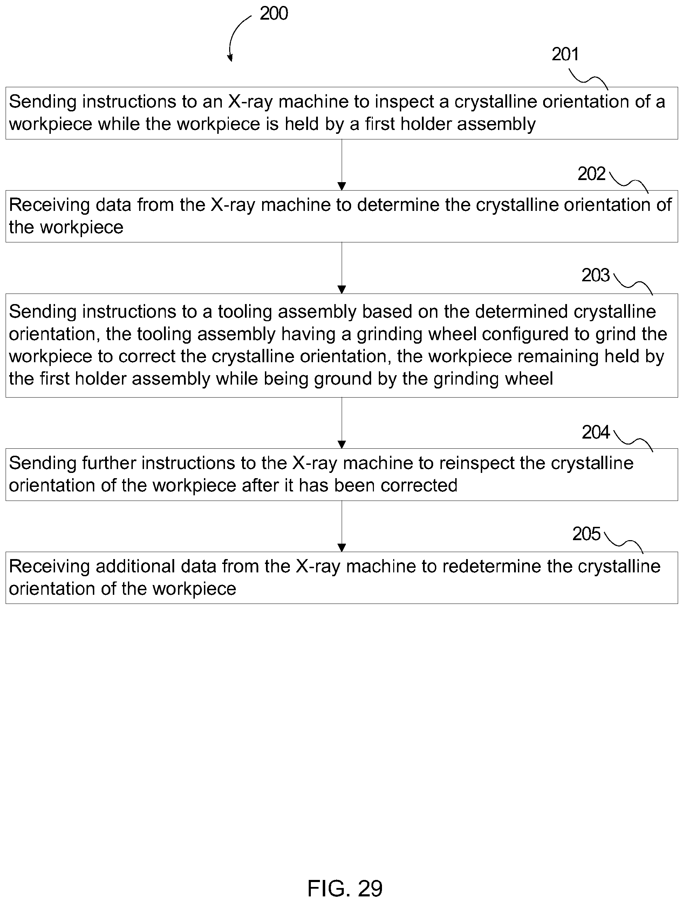

It should also be noted that the computer system 18 has a processor comprising a computer readable medium or code that interacts with all sensors, motors, the X-ray machine 28, spindles 8a and 8b, etc. to perform all operations disclosed herein (FIG. 29). In some embodiments, the computer readable medium includes instructions for a method for analyzing the crystalline structure/orientation of a workpiece 20 with the X-ray machine 28 and then correcting the crystalline structure/orientation with the first interchangeable tooling 14 and the second interchangeable tooling 16 (e.g., the selected first grinding wheel and the second grinding wheel 16). Specifically, the computer-readable medium which when executed by a processor performs a method 200 that includes sending instructions to the X-ray machine 28 to inspect the crystalline orientation of the workpiece 20 while the workpiece 20 is held by the first holder assembly 34 (201). The instructions may include commands to move the X-ray machine 28 into position, capture X-ray diffraction patterns and imaging data for the workpiece 20, and perform diagnostic testing. The diffraction pattern may include a picture of the workpiece 20 with a specified crystal orientation. Further, the X-ray diffraction pattern provides a means for verifying the crystal orientation during the machining process with a high level of accuracy. In some embodiments, 201 may begin after the X-ray machine 28 is placed in an imaging position. The imaging position may describe an area adjacent an exterior surface of the workpiece 20 where the X-ray machine 28 is advantageously disposed to analyze the workpiece 20 when held in a crystal analysis position by the first holder assembly 34 (FIG. 13).

The method 200 may continue by receiving data from the X-ray machine 28 to determine the crystalline orientation of the workpiece 20 (202). The data may include X-ray imaging and diffraction data from which the processor 18 is able to calculate the difference between a current crystalline orientation of the workpiece 20 and a desired crystalline orientation of the workpiece 20. This calculation may be accomplished through a calculation subroutine that first determines a crystalline orientation based on the diffraction data and then calculates a tilt angle as an angular difference between the crystalline orientation and an idealized imaginary plane. In some embodiments, data received from the X-ray machine 28 may include X-ray diffraction data for the workpiece 20, a six-axis representation of a hexagonal SiC crystal projected onto a desired reference plane, and optical encoder data. The optical encoder data may denote the position of the holder assemblies 34,36 and the X-ray machine 28. In further embodiments, the X-ray machine 28 may provide information that relates the workpiece's 20 position to the orientation of a machine learning model which generates a digital template. This process may allow the controller/processor (e.g., 11, 18) to refine the workpiece's 20 structure with higher precision, predict future properties, and enhance design capabilities.

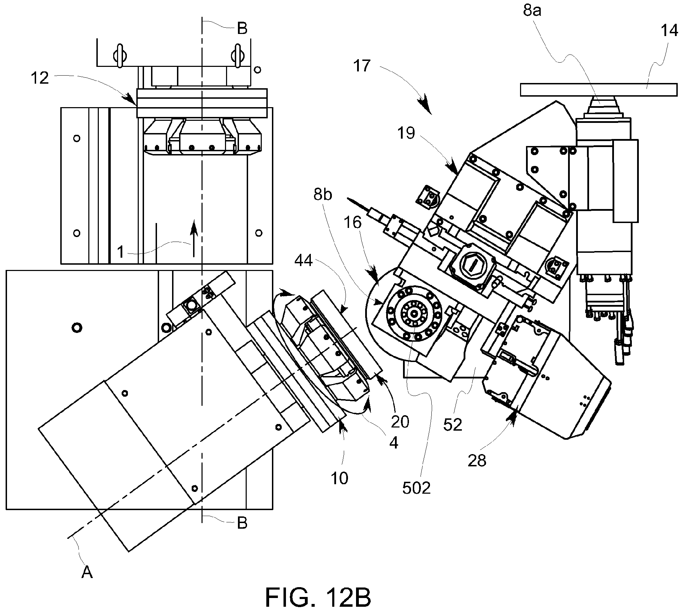

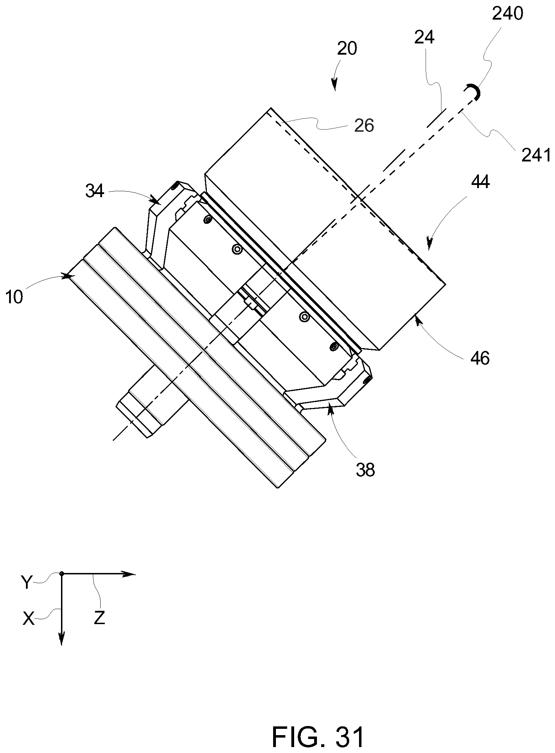

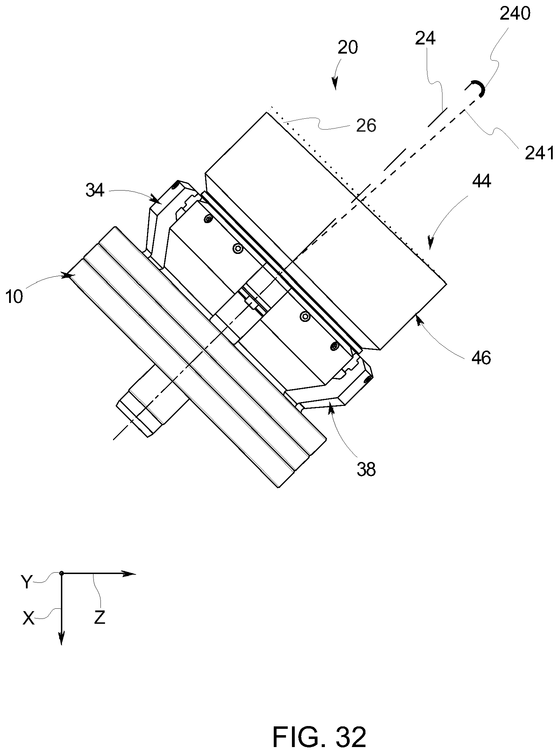

As shown in FIG. 12B, the method 200 may continue by sending instructions to the tooling assembly 17 to grind the workpiece 20 with the interchangeable tooling 16 (e.g., the second grinding wheel); thereby correcting the crystalline orientation of the workpiece 20 based on the determined crystalline orientation (203). In some embodiments, the instructions may include a series of commands that direct the subcomponents of the tooling assembly 17 (e.g., first interchangeable tooling 14, second interchangeable tooling 16, X-ray machine 28, motors 402 and 502, and spindles 8a and 8b) to operate, alone or in concert, to effectuate correcting the crystalline orientation by removing material from the exterior of the workpiece 20 with the interchangeable tooling (e.g., 14, 16) while the workpiece 20 is held by tool holder assemblies (e.g., 34, 36). Further. Instructions to the tooling assembly 17 may include instructions that direct the motor system 4 to move the tooling assembly 17 along or about arrows X, Y, Z, B1, D1, and E1 (FIGS. 1B-1F). The instructions to the tooling assembly 17 may include a sequence of commands to be executed by the subcomponents of the tooling assembly 17 when performing the grinding operation. In further embodiments, the method 200 may include a grinding subroutine that begins by rotating the workpiece 20 into a crystal correction position with a first motor 204 while the workpiece 20 is held by the first holder assembly 34 (FIGS. 12B and 31). The subroutine may continue by rotating the second grinding wheel 16 into a dome correction position with a second motor (e.g., 4, 6a) in accordance with the instructions for the tooling assembly 17. In some embodiments, moving the first holder assembly 34 and the second grinding wheel 16 into the crystal correction position and the dome correction position, as described, acts as a honing operation that enables the processor 18 to begin the grinding operation with the first holder assembly 34 and the second grinding wheel 16 in known positions. The imaging position, the crystal analysis position, the crystal correction position, and the dome correction position may be sourced from preset values, automatically calculated based on X-ray data, encoder data, and sensor data, supplied by a user, or retrieved from a third-party system. The subroutine may continue by removing a first portion 26 of the workpiece 20 with the second grinding wheel 16 to form a corrected surface. FIGS. 31 and 32 show an embodiment of a surface correction operation when the workpiece 20 begins with a crystalline orientation in the {100} family such that the seed face 42 is in the [001] plane and a primary crystal axis 24 extends perpendicular to the Miller Indices [001] plane. In some embodiments, removing the first portion 26 may include grinding away sections of the dome face 44 such that a desired crystalline plane 241 of the workpiece 20 is angularly offset from the primary crystalline axis 24 by the off-angle 240 or tilt angle (FIG. 32). Additionally, removing the first portion 26 of the workpiece 20 may include moving the second grinding wheel 16 into contact with a dome face 44 of the workpiece and then moving the second grinding wheel 16 in a multi-axis pattern to grind away the first portion 26 of the workpiece 20. The multi-axis pattern is designed to impart desirable surface characteristics to the dome surface 44.

The method 200 may continue by sending further instructions to the X-ray machine 28 to reinspect the crystalline orientation of the workpiece 20 after it has been corrected (204). 204 acts as an error correction and workpiece 20 validation operation to reassess the current crystalline orientation of the workpiece 20 after the grinding operations in 203. In some embodiments, the further instructions to the X-ray machine 28 may be included in an imaging subroutine that includes rotating the workpiece 20 into the crystal analysis position with the first motor 204, rotating the X-ray machine 28 into the imaging position with the second motor 4, and capturing diffraction data for the workpiece 20 with the X-ray machine 28. The imaging subroutine may be included in instruction sets generated by the processor 18 to enable X-ray imaging of the workpiece 20 at any point during the method 200. The method 200 may continue by receiving additional data from the X-ray machine 28 to redetermine the crystalline orientation of the workpiece (205). In some embodiments, the calculation subroutine may be executed during the redetermining of 205.

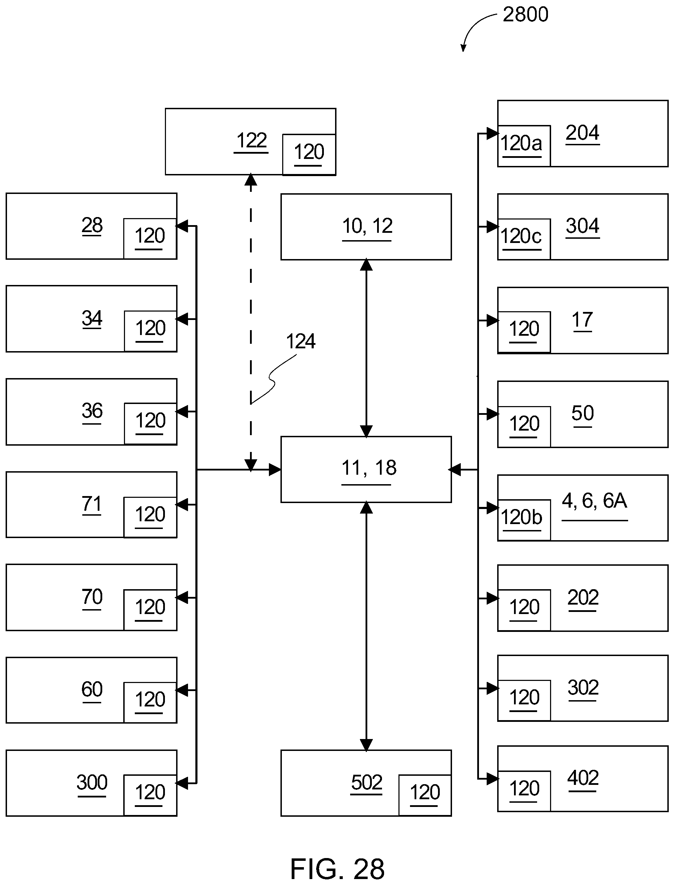

In some embodiments, the method 200 derived from the computer readable medium enables granular feedback and control of the machine 100 by monitoring a distributed array 2800 of sensors and encoders 120 that are integrated or operatively coupled therewith (FIG. 28). This distributed array 2800 may include the plurality of encoders 120 (e.g., optical encoders, absolute position encoders, incremental position encoders, rotary encoders, angular encoders, and linear encoders). Further, the plurality of encoders 120 may measure position, speed, and movement in order to generate feedback which the processor 18 uses to execute accurate and repeatable grinding operations. Further, the plurality of encoders 120 may facilitate synchronizing the components of the machine 100 to prevent collisions and ensure all timing constraints are satisfied when performing grinding or imaging operations. In some embodiments, the plurality of encoders 120 may be used to supplement positioning sensors that are integrated into servomotors used throughout the machine 100. This secondary feedback system may enable each servomotor to be brought to its commanded position more quickly and precisely, and with less overshooting.

The plurality of sensors and encoders 120 may generate feedback data that enables the machine 100 to operate as a closed-loop system with a plurality of control loops running both simultaneously and independently. For example, in some embodiments, the method 200 may further include a subroutine for implementing encoder-based control of the grinding operation to correct the crystalline orientation of the workpiece 20. The plurality of encoders 120 may provide the processor 18 with real-time feedback (e.g., rotation speed data for the grinding wheel 14, a continuous stream of three-dimensional positioning data for the second motor 4) as the tooling assembly 17 is maneuvered to correct the crystalline orientation of the workpiece 20. This subroutine may include receiving signals from the plurality of encoders 120 indicating positions of the first holder assembly 34 and the tooling assembly 17. In some embodiments, processor 18 first ascertains the state of the machine 100 from the plurality of encoders 120 and then generates an instruction set that maneuvers the first holder assembly 34 and the tooling assembly 17 to perform a desired grinding operation (FIGS. 30-32). In some embodiments, the subroutine may continue by sending instructions to at least one motor (e.g., 6, 6a, 25A, 52, 202, 204, 402, and 502) associated with the first holder assembly 34 and the tooling assembly 17, to generate relative movement therebetween such that the grinding wheel (e.g., 14, 16) and the workpiece 20 held by the first holder assembly 34 are oriented such that the grinding wheel (e.g., 14, 16) is positioned to grind a surface of the workpiece 20 to correct the crystalline orientation thereof.

In some embodiments, each of the actuators, motors, and spindles in the machine 100 (e.g., 4, 6, 6a, 8a, 8b, 25A, 25B, 37, 37a, 40, 52, 70, 71, 202, 204, 302, 304, 402, and 502) has at least one corresponding encoder or sensor from the plurality of encoders 120 operatively coupled thereto (FIG. 28). Accordingly, the processor 18 may assess feedback from the machine 100 in real time and thereby repeatedly execute accurate grinding and imaging operations. Further, all desired positions may be predefined, calculated based on the state of the machine, supplied by the user, or retrieved from a third party. In some embodiments, the encoder-based control for operating the first motor 204 includes capturing a current position of the first motor 204 with at least one first optical encoder 120a, and comparing, the current position of the first motor 204 and a desired position of the first motor 204 to determine appropriate output characteristics for the first motor 204. In some embodiments, the appropriate output characteristics include an angular offset of the first motor 204. In further embodiments, the encoder-based control for operating the second motor (e.g., 4, 6, and 6a) includes capturing a current position of the second motor 4 with at least one second optical encoder 120b and comparing the current position of the second motor 4 and a desired position of the second motor 4 to determine appropriate output characteristics for the second motor 4 where the appropriate output characteristics include an angular offset of the second motor 4. In further embodiments, the encoder-based control for operating a third motor (e.g., 302) includes capturing a current position of the third motor 302 with at least one third optical encoder 120C when the third motor 302 moves the second holder assembly 36 linearly. The processor 18 may then compare the current position of the third motor 302 and a desired position of the third motor 302 to determine appropriate output characteristics for the third motor 302. In some embodiments, the appropriate output characteristics for the third motor 302 include a linear offset of the third motor 302 such that the third motor 302 moves the second holder assembly 36 either closer to or away from the first holder assembly 34.

As shown in FIGS. 9-11 and 16-17C, the processor 18 may execute a subroutine to perform a seed surface correction operation by first transferring the workpiece 20 from the first holder assembly 34 to the second holder assembly 36. In some embodiments, the motor (e.g., motor 302) moves the second holder assembly 36 along axis B-B during the transfer. Further, the transferring may begin after the dome surface 44 has been ground to produce a corrected surface. The first motor 202 may rotate the first workhead 10 and the first holder assembly 34 about axis A1 until the first holder device 34 is concentrically aligned with the second holder device 36 along axis B-B (FIG. 9). The third motor 302 may then move the second holder assembly 36 toward the first holder device 34 along axis B-B until the second holder assembly 36 grasps onto the dome surface 4 of the workpiece before moving the second holder assembly 36 away from the first holder assembly 34 (FIG. 16 and 17). The subroutine may continue by rotating the first grinding wheel 14 into a seed correction position with the second motor 4 (FIG. 18A). The subroutine may continue by removing a second portion of the workpiece 20 with the first grinding wheel 14 to form a corrected seed surface 42, wherein the corrected seed surface is parallel; to the corrected surface. In some embodiments, removing the second portion may include grinding away sections of the seed face 42 such that a seed plane, which is disposed perpendicularly to the seed face 42, is angularly offset from the desired crystalline plane 241 by the off-angle 240 to become perpendicularly disposed to the newly corrected dome face 44. Further, removing the second portion of the workpiece 20 may include moving the first grinding wheel 14 into contact with a seed face 42 of the workpiece 20 and then moving the first grinding wheel 14 in a pattern to grind away the second portion of the workpiece 20. Thus modified, both the dome surface 44 and the seed surface 42 of the workpiece 20 are manicured to conform to the desired crystalline orientation. The subroutine may continue by transferring the workpiece 20 from the second holder assembly 36 to the first holder assembly 34 so that the workpiece 20 is ready for further X-ray imaging or grinding operations.

As shown in FIGS. 12A and 30, the processor 18 may execute a subroutine to perform a rough correction operation when the dome surface 44 is significantly misaligned. The subroutine may begin by first rotating the workpiece 20 into a horizontal position with the first motor 204 and rotating the first grinding wheel 16 into a material removal position with the second motor 4 (FIG. 12A). The subroutine may continue by removing a predefined portion 29 of the workpiece 20 with the first grinding wheel 14 to form a manicured surface (FIG. 30). The predefined portion 29 may be removed by moving the first grinding wheel 14 into contact with the workpiece 20 and then moving the first grinding wheel 14 in a reciprocating manner while the first holder assembly 34 rotates the workpiece 20 to grind away coarse material. In some embodiments, the seed face 42 is in the Miller Indices [001] plane and the crystalline orientation is perpendicular to the [001] plane. As such, removing the predefined portion 29 may include grinding away sections of the dome face 44 such that an intermediary plane 243, which is disposed perpendicularly to the dome face 44, is angularly offset from the primary crystal axis 24 by intermediary angle 242. In some embodiments, the manicured surface may have tooling marks or other imperfections that prevent the manicured surface from being sufficiently planar. Alternatively, the manicured surface may not have a sufficient crystalline orientation. Accordingly, the rough correction subroutine must be followed by an additional surface correction operation before the workpiece 20 is finished. In some embodiments, the rough correction operation is followed by a traditional grinding operation to remove the first portion 26 and further extend the intermediary angle 242 such that the intermediary plane 243 coincides with the desired crystalline plane 241.

In some embodiments, the processor 18 may execute subroutines to control the vacuum system 22 when attaching the workpiece 20 to either the first holder assembly 34 or the second holder assembly 36. The processor 18 may generate instructions that direct the vacuum system 22 to apply a vacuum to the first holder assembly 34 to bind the workpiece 20 thereto. Similarly, the processor may generate instructions that direct the vacuum system 22 to apply a vacuum to the second holder assembly 36 to bind the workpiece 20 thereto. In some embodiments, a flow and/or pressure sensor is integrated into the vacuum system 22 so that the processor 18 may determine if there are any faults or leaks. In some embodiments, the processor 18 uses information from the plurality of encoders to perform diagnostic assessments on the machine 100. For example, the plurality of rotary encoders 120 may identify if any of the motors are slipping. Alternatively, the plurality of sensors may be employed to determine if there is an obstruction on the track of a linear actuator. The surface correction of the boule 20 face that is performed by the second grinding wheel 16 will typically be done by a grinding wheel 16 with an angled and finer grit surface to provide more of a finished/smoother surface, in comparison with the rougher finish that may be provided by the first grinding wheel 14.

During surface correction of the now flat dome surface (it should be appreciated that the dome or "domed" side is made for simplicity of reference, even though it has been made flat by this process), the boule 20 is held stationary (not rotated by the jaws 37), as the grinding wheel 16 moves back and forth and up and down.

Subsequent to any face surface correction of the boule 20, the peripheral surface 21 of the boule 20 may then also require some modification. In such case, the boule 20 is moved back into engagement with the second workhead 12, subsequent to correction of the flattened dome side of the boule, the seed side may require modification so that it is parallel to the ground, domed side.

This is accomplished by rotating the first workhead 10 toward the second workhead 12, moving the second workhead 12 into engagement with the dome side of the boule 20 applying a vacuum force to the boule dome surface, clamping the periphery 21 of the boule 20 with jaws 37 of the second holder 36, and rotating the holder 36 and jaws 37 with rotational motor 302, and bringing grinding wheel 16 into engagement with the seed side 42, as shown in figure 18a.

In one embodiment, the rotational motor 204 operates so that the boule 20 faces the second holder assembly 36 and the linear motor 304 operates so that the second holder assembly 36 is moved into engagement with the previously ground face of the boule 20.

In one embodiment, the jaws of both holder assemblies 34 and 36 remain retracted, to expose the entire periphery of the boule 20, and is held from movement or rotation only by vacuum force applied to opposite sides of the boule 20, and/or compressive forces applied to the boule as a result of the boule 20 being sandwiched between the holder assemblies 34 and 36.

In one embodiment, the seed side of the boule 20 has vacuum applied thereto by vacuum plate 30 and the ground dome side is physically contacted and pushed by vacuum plate 32 without applying vacuum towards the vacuum plate 30.

In one embodiment, the amount of compressive force applied by the holder assemblies 34 and 36 can be precisely regulated by the linear motor 304, and a force sensor, such as a strain gauge (not shown) placed in the sandwiched compressive path between the holder assemblies 34 and 36, or behind one of the vacuum plates. The force sensor and the motor 304 are both in communication with the computer system 18, which contains software configured to receive sensor information and use such information to control the motor 304 to control and set an amount of compressive force applied to the boule 20.

In one embodiment, during peripheral edge grinding of boule 20, the plunger tool previously described in connection with the initial rough grinding operator on the boule periphery may also be used.

After the boule 20 has been corrected for crystal orientation and configured so that the opposite face surfaces are flat and parallel to one another (with a central axis that is angled at the desired orientation with respect to the crystalline lattice), and so that the periphery is cylindrical about the central axis or the boule 20, the outer periphery of the boule 20 can then be further ground so as to be provided with a flat portion thereon or a notch thereon to provide an indication of the crystal orientation therein. Specifically, the flat portion (sometimes referred to as an "orientation flat" on the semiconductor wafers that are formed by being sliced from the boule) is a flattened edge on the periphery of hockey puck shaped boule, while the notch is a cut region along the edge (the flat or notch running parallel to the longitudinal axis of the boule), either of which serves as a reference to identify the crystallographic orientation of the wafer material. The position and length of this flat or notch can indicate not just the crystal plane but also the dopant type in some instances. Manufacturers and engineers use this physical feature to correctly align the wafer during subsequent processing steps like lithography or chemical vapor deposition, ensuring that the device characteristics are uniform and meet specifications. In some embodiments, machine 100 may employ identification flats for wafers up to 150-mm diameter and identification notches for wafers 200 mm and larger.

Such a notch or flat can be created by a grinding wheel 16a mounted on the second spindle (e.g. spindle 8b), in the orientation, or with a grinding wheel configuration, illustrated in Figure 17D for providing the notch. It can be appreciated that the grinding wheel 16a has a pointed edge to provide the notch in the periphery of the boule 20. Alternatively, if a flat portion is to be provided on the outer periphery 46 instead of a notch, rather than a relative toward and away movement of the boule periphery 46 relative to the pointed outer periphery of grinding wheel 16a to form such notch, instead the wheel 16a and boule 20 can move relatively up and down so that the wheel forms a flat along a small circumferential portion along the otherwise cylindrical outer periphery 46 of the boule 20. It should be appreciated that any combination of movements to effect such grinding of the boule 20 by rotating grinding wheel 16a can be utilized (e.g., movement of the boule 20, movement of the grinding wheel 16a, or movement of both). The grinding wheel 16a can be carried by the tool changing system 60 when not in use.

It can be appreciated that the tool changing system 60 can be provided with a plurality of grinding wheels, including, for example, fine and coarse grinding wheels that are configured to be mounted on the first spindle 8a, fine and coarse grinding wheels that are configured to be mounted on the second spindle 8b (having a spindle axis substantially perpendicular to that of spindle 8a), and a notching grinding wheel as illustrated in figure 17D for mounting on the second spindle 8b. These grinding wheels can, in one embodiment, be as few as two, in which case no tool changing system 60 would be used.

Furthermore, additional and/or alternative operations and processes may be included in the disclosed method and machine for implementing the same (including added parts or devices to the system to implement said operation(s) / process(es)), including, but not limited to:

Centering: As mentioned previously, in embodiments, a centering mechanism may be provided for the ability to center and/or recenter the workpiece, including the ability for centering of the diaphragm chuck 38. For example, when an eccentric grind of the boule/workpiece 20 is desired by a customer, centering the workpiece 20 enables proper and consistent machining. As an example, centering may be particularly useful when reducing (e.g., by eccentric grinding) diameters of as grown boules, which is not necessarily about the original center of the boule. In embodiments, the workpiece 20 may be centered one or more times during the process, for example.

UV light inspection capability: In embodiments, a crystal structure/orientation of SiC used for semiconductor devices is 4H polytype. Sometimes, by accident, a larger polytype (e.g., 6H polytype) is grown on the boule. Since such extra material cannot be used for the desired 4H polytype, the material thus needs to be removed (e.g., via grinding). According to embodiments, using UV light from a light source to illuminate the boule reveals where the extra material / 6H may have grown inadvertently, as it will show up as a different color than the 4H polytype. This capability allows for examination of the initial finished puck for this foreign polytype. If such material is detected, then its location relative to the orientation of the boule may be determined by the XRD capability / x-ray machine previously described, for example. In some embodiments, such light source may be part of the system and moved and used in a similar manner as described with reference to the grinding wheels, for example. In embodiments, the workpiece may be inspected one or more times during the process, for example.

Laser scribing the finished workpiece: For tracking purposes, some users may want to include laser scribing capability within the machine / system so that the final part includes laser scribe indicating information (e.g., lot number, furnace number, boule ID number, etc.) on at least one face of the workpiece. Accordingly, in some embodiments, a laser scribing device may be provided to scribe such information into the workpiece or boule. In embodiments, the workpiece may be scribed by the laser scriber before unloading, for example.

External automation: While the Figures and description above notes the ability for manual loading and unloading, it should be noted that an additional and/or alternative external automation device(s) (e.g., a robot) may be employed to load and/or unload the workpiece / boule with respect to the workhead(s).

Photobooth and/or vision system: In addition, a photo system and/or a vision system may be employed in the method and machine 100/system, e.g., which may include a camera, magnifier, and/or other devices with very fine part alignment/adjustment, to take high resolution photos, images, and/or readings of the boule or workpiece. In embodiments, the photos, images, and/or readings may be performed one or more times during the process, for example.

While the Figures show different operations for machining a workpiece or boule and steps that may be implemented according to a method and embodiments herein, the order of steps is not intended to be limited to the order as shown in the Figures, nor is the order of the Figures intended to imply sequential implementation of such steps and operations. It should be understood that such steps may be re-arranged, multiplied (e.g., duplicated and/or implemented more than once) as well as removed based on customer needs and/or materials being used, for example. Moreover, the operations performed on the workpiece or boule are not limited to the associated workhead described above. That is, while an operation may be described as being performed on a workpiece when being held by a first workhead, it should be understood that the same or similar operation may be performed while the workpiece is held by a second workhead, and vice versa. Further, operations need not be limited with regards to being performed on one or the other workhead, and that includes performing such operations on the workpiece using either or both holder assemblies.

It should also be appreciated that, in some aspects of this disclosure, the same reference numerals appearing in various drawings may be considered to be the same or similar components throughout, even if illustrated differently. However, each Figure and description thereof should also be considered for all it discloses and stand on its own as a separate invention, and may be labeled inconsistently with other Figures herein.

The disclosed machine and method result in several improvements and advantages over known and prior art ways for preparing boules or similar workpieces. Rather than such steps including manual arrangement and tools, this disclosure provides a machine for automatically performing multiple operations to a workpiece in a series of steps (no matter the order of such steps). As such, rather than the known twelve-to-twenty-hour time period for forming workpieces, this disclosure enables workpieces to be prepared and formed in a significantly lower amount of time, e.g., a total of three to four (3 to 4) hours providing a faster throughput. In addition, costs for labor and materials may be reduced. Also, consumables and waste are reduced.

While the principles of the disclosure have been made clear in the illustrative embodiments set forth above, it will be apparent to those skilled in the art that various modifications may be made to the structure, arrangement, proportion, elements, materials, and components used in the practice of the disclosure.

It will thus be seen that the features of this disclosure have been fully and effectively accomplished. It will be realized, however, that the foregoing preferred specific embodiments have been shown and described for the purpose of illustrating the functional and structural principles of this disclosure and are subject to change without departure from such principles. Therefore, this disclosure includes all modifications encompassed within the scope of the claims.

### Numbered embodiments

The present disclosure includes the following numbered embodiments E1 to E84.

E1. A method for forming a workpiece, the method comprising: loading the workpiece onto a first workhead; relatively positioning the workpiece with respect to a second workhead so that the workpiece is in contact with both the first workhead and the second workhead; grinding an outer peripheral surface of the workpiece in contact with the first workhead and the second workhead using a first grinding wheel; grinding a face of the workpiece using a second grinding wheel; and unloading the workpiece.

E2. The method according to E1, wherein the loading the workpiece comprises placing the workpiece onto a first workpiece holding device of the first workhead, wherein the first workpiece holding device comprises a first vacuum plate, the first vacuum plate configured for use with a vacuum device to apply vacuum force thereto for holding the workpiece, and wherein the first vacuum plate is configured for movement between a retracted position and an extended position.

E3. The method according to E1 or E2, wherein the relatively positioning the workpiece with respect to the second workhead comprises rotating the first workhead about a first axis for positioning the workpiece for alignment along a second axis with respect to the second workhead.

E4. The method according to any one of E1 to E3, wherein the method further comprises moving either the first workhead or the second workhead, or both, linearly towards the workpiece in order to apply pressure to the workpiece.

E5. The method according to E3 or E4 as dependent from E3, wherein the unloading the workpiece comprises rotating the first workhead about the first axis away from the second axis.

E6. The method according to any one of E1 to E5, further comprising retracting the second workhead away from the workpiece such that the second workhead is disengaged from the workpiece during the grinding of the face of the workpiece by the second grinding wheel.

E7. The method according to any one of E1 to E6, further comprising: retracting the second workhead away from the workpiece; obtaining data from X-rays pointing on a face in an axial direction of the workpiece via an X-ray machine; or obtaining data from X-rays pointing to an outer diameter face of the workpiece via the X-ray machine; and orienting the workpiece via rotation as a result of the obtained X-ray data, in order to assist in positioning the face of the workpiece for grinding using the second grinding wheel.

E8. The method according to any one of E1 to E7, wherein the workpiece is held by the first workhead for the grinding the face, and wherein the method further comprises: transferring the workpiece from the first workhead to the second workhead; and returning the workpiece from the second workhead to the first workhead.

E9. The method according to E8, further comprising: grinding the outer peripheral surface of the workpiece held by the second workhead using the first grinding wheel.

E10. The method according to E9, further comprising: grinding the face of the workpiece held by the second workhead using the second grinding wheel.

E11. The method according to any one of E8 to E10, further comprising: grinding the face of the workpiece held by the second workhead using the second grinding wheel.

E12. The method according to any one of E1 to E11, further comprising moving the first grinding wheel into contact with the outer peripheral surface of the workpiece, and retracting the first grinding wheel away from the workpiece.

E13. The method according to any one of E1 to E12, further comprising moving the second grinding wheel into contact with the face of the workpiece, and retracting the second grinding wheel away from the workpiece.

E14. The method according to E3 or any one of E4 to E13 as dependent from E3, wherein the first grinding wheel is configured for rotation about a third axis and at least a portion of the first workhead and the second workhead is configured for rotation about the second axis, the first grinding wheel being further configured for movement towards and away from the workpiece, and wherein the grinding the outer peripheral surface of the workpiece comprises rotating the first grinding wheel and rotating the at least the portion of the first workhead and the second workhead.

E15. The method according to E3 or any one of E4 to E14 as dependent from E3, wherein the first workhead is configured for rotational movement about the first axis relative to the second grinding wheel, the second grinding wheel is configured for rotation and linear movement relative to the workpiece in order to grind the face thereof, and wherein the grinding the face of the workpiece comprises rotating the second grinding wheel and linearly moving the second grinding wheel relative to the face of the workpiece.

E16. The method according to any one of E1 to E15, wherein the workpiece is a boule of material configured for cutting into wafers.

E17. A machine for forming a workpiece comprising: a first workhead configured to contact and hold a workpiece; a second workhead configured to contact the workpiece; a first grinding wheel for grinding an outer peripheral surface of the workpiece in contact with the first workhead and the second workhead, and a second grinding wheel for grinding a face of the workpiece.

E18. The machine according to E17, wherein the first workhead comprises a first workpiece holding device, the first workpiece holding device comprising a first vacuum plate, the first vacuum plate configured for use with a vacuum device to apply vacuum force thereto for holding the workpiece, and wherein the first vacuum plate is configured for movement between a retracted position and an extended position.

E19. The machine according to E18, wherein the first workhead comprises an actuator connected to the first vacuum plate, the actuator being configured to move the first vacuum plate and the workpiece between the retracted position and the extended position.

E20. The machine according to E18 or E19, wherein the first workpiece holding device further comprises a clamping mechanism, wherein the clamping mechanism is configured for movement between an open position and a closed position for clamping and de-clamping the first vacuum plate, and wherein the first vacuum plate is configured for movement between a retracted position and an extended position relative to the clamping mechanism, thereby retracting and extending the workpiece relative to the clamping mechanism.

E21. The machine according to any one of E17 to E20, wherein the first workhead is configured for rotation about a first axis for positioning the workpiece in alignment along a second axis with respect to the second workhead and for unloading the workpiece via rotation away from the second axis.

E22. The machine according to E21, wherein either the first workhead or the second workhead, or both, is configured for linear movement along the second axis towards the second workhead or the first workhead, respectively, in order to apply pressure to the workpiece.

E23. The machine according to E21 or E22, wherein the first grinding wheel is configured for rotation about a third axis and at least a portion of the first workhead and the second workhead being configured for rotation about the second axis, the first grinding wheel being further configured for movement towards and away from the workpiece.

E24. The machine according to any one of E17 to E23, wherein the first workhead is configured for rotational movement about a first axis relative to the second grinding wheel, the second grinding wheel being configured for rotation and linear movement relative to the workpiece in order to grind the face thereof.

E25. The machine according to any one of E17 to E24, further comprising an X-ray machine configured for movement relative to the workpiece for obtaining data from X-rays of the workpiece that is held by at least one of the first workhead and the second workhead. E26. The machine according to E25, wherein the workpiece is configured to be oriented by the first workhead for grinding the face of workpiece using the second grinding wheel via obtained X-ray data.

E27. The machine according to any one of E17 to E26, wherein the second workhead is further configured to hold the workpiece and/or receive the workpiece from the first workhead.

E28. The machine according to any one of E17 to E27, wherein the workpiece is a boule of material configured for cutting into wafers.

E29. The machine according to any one of E17 to E28, further comprising: rotating the workpiece as a result of obtained X-ray data around a vertical (Y) axis to grind a crystal lattice of the workpiece in a corrected manner, thereby adding geometrical features to the workpiece.

E30. The machine according to any one of E17 to E29, further comprising: rotating the workpiece as a result of obtained X-ray data about at least one of an X or a Z horizontal axis to grind a crystal lattice of the workpiece in a corrected manner, thereby adding geometrical features to the workpiece.

E31. A system for forming a workpiece comprising: an enclosure; at least one workhead disposed within the enclosure and configured to contact and hold a workpiece; a tooling assembly disposed within the enclosure for grinding a surface of the workpiece while the workpiece is in contact with the at least one workhead; and an X-ray machine disposed within the enclosure and configured to obtain at least one of X-ray images and diffraction data from the workpiece that is held by the at least one workhead.

E32. The system according to E31, wherein a first workhead comprises a first workpiece holding device, the first workpiece holding device is configured to retain the workpiece at a desired orientation relative to the tooling assembly.

E33. The system according to E32, further comprising a vacuum system connected with the at least one workhead, the vacuum system is configured to apply a vacuum force to the workpiece for holding the workpiece.

E34. The system according to E33, wherein the first workpiece holding device comprises a first vacuum plate, the first vacuum plate is configured for movement between a retracted position and an extended position.

E35. The system according to E34, wherein the first vacuum plate is in fluid communication with the vacuum system.

E36. The system according to E34 or E35, wherein first workpiece holding device comprises an actuator connected to the first vacuum plate, the actuator is configured to move the first vacuum plate and the workpiece between the retracted position and the extended position.

E37. The system according to any one of E34 to E36, wherein the first workpiece holding device further comprises a clamping mechanism, wherein the clamping mechanism is configured for movement between an open position and a closed position for clamping and de-clamping the first vacuum plate, and wherein the first vacuum plate is configured for movement between a retracted position and an extended position relative to the clamping mechanism, thereby retracting and extending the workpiece relative to the clamping mechanism.

E38. The system according to E31 or any one of E32 to E37 as dependent from E31, wherein the at least one workhead includes a first workhead and a second workhead.

E39. The system according to E38, wherein the first workhead is configured for rotation about a first axis for positioning the workpiece in alignment along a second axis with respect to the second workhead and for unloading the workpiece via rotation away from the second axis.

E40. The system according to E38 or E39, wherein either the first workhead or the second workhead, or both, is configured for linear movement along a second axis towards the second workhead or the first workhead, respectively, in order to apply pressure to the workpiece. E41. The system according to any one of E38 to E40, wherein at least a portion of the first workhead and at least a portion of the second workhead are configured for rotation about a second axis.

E42. The system according to any one of E38 to E41, wherein the second workhead is further configured to hold the workpiece and/or receive the workpiece from the first workhead.

E43. The system according to any one of E31 to E42, wherein the tooling assembly is configured for rotation about a third axis and for movement towards and away from the workpiece.

E44. The system according to any one of E31 to E43, wherein the tooling assembly includes at least one first rotary grinding wheel and at least one second rotary grinding wheel, and wherein the at least one first rotary grinding wheel and the at least one second rotary grinding wheel are further configured for movement towards and away from the workpiece, and wherein the at least one first rotary grinding wheel and the at least one second rotary grinding wheel are further configured for rotational movement relative to the workpiece. E45. The system according to E44, wherein the tooling assembly includes a frame, and wherein the at least one first rotary grinding wheel, the at least one second rotary grinding wheel, and the X-ray machine are mounted onto the frame.

E46. The system according to E45, wherein the at least one first rotary grinding wheel, the at least one second rotary grinding wheel, and the X-ray machine are radially distributed about the frame.

E47. The system according to any one of E44 to E46, wherein a first workhead is configured for rotational movement about a first axis relative to the at least one second rotary grinding wheel, the at least one second rotary grinding wheel is configured for rotation and linear movement relative to the workpiece in order to grind a face thereof.

E48. The system according to any one of E44 to E47, wherein the at least one first rotary grinding wheel is detachably mounted onto a frame by a first interchangeable tooling.

E49. The system according to any one of E44 to E48, wherein the at least one second rotary grinding wheel is detachably mounted onto a frame by a second interchangeable tooling.

E50. The system according to any one of E44 to E49, wherein the at least one first rotary grinding wheel is configured to grind an outer peripheral surface of the workpiece.

E51. The system according to any one of E44 to E50, wherein the at least one second rotary grinding wheel is configured to grind a face of the workpiece.

E52. The system according to any one of E44 to E51, wherein a first workhead is configured for rotational movement about a first axis relative to the at least one second rotary grinding wheel, the at least one second rotary grinding wheel is configured for rotational and linear movement relative to the workpiece in order to grind a face thereof.

E53. The system according to any one of E44 to E52, wherein the workpiece is configured to be oriented by a first workhead for grinding a face of the workpiece using the at least one second rotary grinding wheel via obtained X-ray data.

E54. The system according to any one of E31 to E53, further comprising a mounting assembly wherein the tooling assembly and the X-ray machine are retained within an interior of the enclosure by the mounting assembly.

E55. The system according to E54, wherein the mounting assembly is a multi-axis manipulator.

E56. The system according to E54 or E55, further comprising a tool changing system coupled to the mounting assembly.

E57. The system according to any one of E31 to E56, wherein the X-ray machine includes a detector disposed within the enclosure, the detector configured to detect X-rays diffracted by the workpiece.

E58. A clamping system for a machining a part, comprising: a plate for receiving a part to be machined, the plate having orifices therethrough, the orifices providing a conduit for a vacuum force to be applied to the part, the plate being compliant to at least partially conform to a surface of the part to be machined; and a plurality of clamp jaws disposed at a periphery of the plate, the clamp jaws configured to move inwardly toward the part to clamp the part therebetween.

E59. The clamping system according E58, further comprising an opposing clamp structure configured to contact a surface of the part opposite the surface that is in contact with the plate, the opposing clamp structure and the plate cooperating to apply a force to a workpiece therebetween.

E60. The clamping system according to E59, wherein the force causes the compliant plate to at least partially conform to the surface of the part.

E61. The clamping system according to any one of E58 to E60, wherein application of a vacuum through the orifices against the part causes the compliant plate to at least partially conform to the surface of the part.

E62. The clamping system according to E59, E60 or E61 as dependent from E59, wherein the plate and opposing clamp structure secure the part therebetween for a grinding operation without application of force from the clamping jaws to the workpiece.

E63. The clamping system according to E59 or any one of E60 to E62 as dependent from E59, wherein the opposing clamp structure comprises another clamping system comprising a second plate and a second plurality of clamp jaws.

E64. A computer-readable medium which when executed by a processor performs a method, comprising: sending instructions to an X-ray machine to inspect a crystalline orientation of a workpiece while the workpiece is held by a first holder assembly; receiving data from the X-ray machine to determine the crystalline orientation of the workpiece; and sending instructions to a tooling assembly based on the determined crystalline orientation, the tooling assembly having a grinding wheel configured to grind the workpiece to correct the crystalline orientation based on the instructions, the workpiece remaining held by the first holder assembly while being ground by the grinding wheel.

E65. The computer-readable medium according to E64, the method further comprising receiving signals from a plurality of encoders indicating positions of the first holder assembly and the tooling assembly, and sending instructions to at least one motor associated with the first holder assembly and the tooling assembly, to generate relative movement therebetween such that the grinding wheel and the workpiece held by the first holder assembly are oriented such that the grinding wheel is positioned to grind a surface of the workpiece to correct the crystalline orientation thereof.

E66. The computer-readable medium according to E64 or E65, the method further comprising: rotating the workpiece into a crystal correction position with a first motor, while the workpiece is held by the first holder assembly; rotating a second grinding wheel into a dome correction position with a second motor in accordance with the instructions for the tooling assembly; and removing a first portion of the workpiece with the second grinding wheel to form a corrected surface.

E67. The computer-readable medium according to E66, wherein removing the first portion of the workpiece includes moving the second grinding wheel into contact with a dome face of the workpiece and then moving the second grinding wheel in a multi-axis pattern to grind away the first portion of the workpiece.

E68. The computer-readable medium according to E66 or E67, the method further comprising capturing a current position of the first motor with at least one first optical encoder, and comparing, the current position of the first motor and a desired position of the first motor to determine appropriate output characteristics for the first motor.

E69. The computer-readable medium according to E68, wherein the appropriate output characteristics include an angular offset of the first motor.

E70. The computer-readable medium according to any one of E66 to E69, the method further comprising capturing a current position of the second motor with at least one second optical encoder, and comparing the current position of the second motor and a desired position of the second motor to determine appropriate output characteristics for the second motor.

E71. The computer-readable medium according to E70, wherein the appropriate output characteristics include an angular offset of the second motor.

E72. The computer-readable medium according to any one of E66 to E71, the method further comprising: transferring the workpiece from the first holder assembly to a second holder assembly; rotating a first grinding wheel into a seed correction position with the second motor; removing a second portion of the workpiece with the first grinding wheel to form a corrected seed surface, wherein the corrected seed surface is parallel; to the corrected surface; and transferring the workpiece from the second holder assembly to the first holder assembly.

E73. The computer-readable medium according to E72, the method further comprising capturing a current position of a third motor with at least one third optical encoder when the third motor moves the second holder assembly linearly and comparing the current position of the third motor and a desired position of the third motor to determine appropriate output characteristics for the third motor.

E74. The computer-readable medium according to E73, wherein the appropriate output characteristics include a linear offset of the third motor.

E75. The computer-readable medium according to any one of E72 to E74, the method further comprising applying a vacuum to a first workpiece holding device with a vacuum system, wherein the first workpiece holding device is included in the first holder assembly, and wherein the vacuum holds the workpiece against the first workpiece holding device.

E76. The computer-readable medium according to any one of E72 to E75, the method further comprising applying a vacuum to a second workpiece holding device with a vacuum system, wherein the second workpiece holding device is included in the second holder assembly, and wherein the vacuum holds the workpiece against the second workpiece holding device.

E77. The computer-readable medium according to any one of E72 to E76, wherein removing the second portion of the workpiece includes moving the first grinding wheel into contact with a seed face of the workpiece and then moving the first grinding wheel in a pattern to grind away the second portion of the workpiece.

E78. The computer-readable medium according to any one of E66 to E77, the method further comprising: rotating the workpiece into a horizontal position with the first motor; rotating a first grinding wheel into a material removal position with the second motor; and removing a predefined portion of the workpiece with the first grinding wheel to form a manicured surface.

E79. The computer-readable medium according to E78, wherein removing the predefined portion of the workpiece includes moving the first grinding wheel into contact with the workpiece and then moving the first grinding wheel in a reciprocating manner while the first holder assembly rotates the workpiece to grind away coarse material.

E80. The computer-readable medium according to any one of E66 to E79, the method further comprising: rotating the workpiece into a crystal analysis position with the first motor; rotating the X-ray machine into an imaging position with the second motor; and capturing diffraction data for the workpiece with the X-ray machine.

E81. The computer-readable medium according to E80, the method further comprising determining a crystalline orientation based on the diffraction data and calculating a tilt angle as an angular difference between the crystalline orientation and an idealized imaginary plane. E82. The computer-readable medium according to E65 or any one of E66 to E81 as dependent from E65, wherein the plurality of encoders includes a plurality of rotary encoders. E83. The computer-readable medium according to any one of E64 to E82, wherein data received from the X-ray machine includes at least one of X-ray diffraction data for the workpiece, a six-axis representation of a hexagonal SiC crystal projected onto a desired reference plane, and optical encoder data.

E84. The computer-readable medium according to any one of E64 to E83, the method further comprising sending further instructions to the X-ray machine to reinspect the crystalline orientation of the workpiece after it has been corrected; and receiving additional data from the X-ray machine to redetermine the crystalline orientation of the workpiece.

## Claims

1. A system for forming a workpiece comprising:
an enclosure;
a plurality of workheads disposed within the enclosure and configured to contact and hold a workpiece;
a tooling assembly disposed within the enclosure for grinding a surface of the workpiece while the workpiece is in contact with the plurality of workheads; and
an X-ray machine disposed within the enclosure and configured to obtain at least one of X-ray images and diffraction data from the workpiece that is held by the plurality of workheads,
wherein the tooling assembly includes at least one first rotary grinding wheel and at least one second rotary grinding wheel, and wherein the at least one first rotary grinding wheel and the at least one second rotary grinding wheel are further configured for movement towards and away from the workpiece, and wherein the at least one first rotary grinding wheel and the at least one second rotary grinding wheel are further configured for rotational movement relative to the workpiece,
wherein a first workhead is configured to orient the workpiece for grinding a face of the workpiece using the at least one second rotary grinding wheel via obtained X-ray data.

2. The system according to claim 1, wherein a first workhead comprises a first workpiece holding device, the first workpiece holding device is configured to retain the workpiece at a desired orientation relative to the tooling assembly,
wherein the system further comprises a vacuum system connected with the plurality of workheads, the vacuum system is configured to apply a vacuum force to the workpiece for holding the workpiece,
wherein the first workpiece holding device comprises a first vacuum plate in fluid communication with the vacuum system and configured for movement between a retracted position and an extended position, and
wherein first workpiece holding device comprises an actuator connected to the first vacuum plate, the actuator is configured to move the first vacuum plate and the workpiece between the retracted position and the extended position.

3. The system according to claim 2, wherein the first workpiece holding device further comprises a clamping mechanism, wherein the clamping mechanism is configured for movement between an open position and a closed position for clamping and de-clamping the first vacuum plate, and wherein the first vacuum plate is configured for movement between a retracted position and an extended position relative to the clamping mechanism, thereby retracting and extending the workpiece relative to the clamping mechanism.

4. The system according to claim 1, wherein the plurality of workheads includes a first workhead and a second workhead,
wherein the first workhead is configured for rotation about a first axis for positioning the workpiece in alignment along a second axis with respect to the second workhead and for unloading the workpiece via rotation away from the second axis,
wherein either the first workhead or the second workhead, or both, is configured for linear movement along a second axis towards the second workhead or the first workhead, respectively, in order to apply pressure to the workpiece, and
wherein at least a portion of the first workhead and at least a portion of the second workhead are configured for rotation about a second axis.

5. The system according to claim 4, wherein the second workhead is further configured to hold the workpiece and/or receive the workpiece from the first workhead.

6. The system according to any one of claims 1 to 5, wherein the tooling assembly is configured for rotation about a third axis and for movement towards and away from the workpiece, and
wherein the tooling assembly includes a frame, and
wherein the at least one first rotary grinding wheel, the at least one second rotary grinding wheel, and the X-ray machine are mounted onto the frame and radially distributed about the frame.

7. The system according to any one of claims 1 to 6, wherein a first workhead is configured for rotational movement about a first axis relative to the at least one second rotary grinding wheel, the at least one second rotary grinding wheel is configured for rotation and linear movement relative to the workpiece in order to grind a face thereof; and
wherein the at least one first rotary grinding wheel is detachably mounted onto a frame by a first interchangeable tooling.

8. The system according to any one of claims 1 to 7, further comprising a mounting assembly wherein the tooling assembly and the X-ray machine are retained within an interior of the enclosure by the mounting assembly.

9. The system according to claim 5, wherein, in use, grinding the face or a further face of the workpiece is performed while the workpiece is held by the second workhead.

10. The system according to claim 9, wherein the workpiece includes the face, the further face, and an outer peripheral surface between the face and the further face,
wherein, in use, the at least one first rotary grinding wheel is used to grind the further face,
wherein, in use, the at least one second rotary grinding wheel is moved towards the face and performs a grinding operation so as to flatten the face such that it is substantially parallel to the further face, and
wherein the workpiece is a boule.

11. The system according to any one of the preceding claims, wherein, in use, the X-ray machine feeds X-ray data to a computer system, which determines the orientation of crystals relative to the ground face surface of the workpiece,
wherein the workpiece is a boule, and
wherein, in the event X-ray data determines that the ground face is not oriented correctly with respect to the crystal orientation, then a surface correction procedure will take place to further grind the face.

12. The system according to any one of the preceding claims, wherein the at least one first rotary grinding wheel is configured to grind an outer peripheral surface of the workpiece.

13. The system according to claim 12, wherein the plurality of workheads includes the first workhead and a second workhead,
wherein, in use, grinding the outer peripheral surface of the workpiece using the at least one first grinding wheel is performed while the workpiece is held only by the first workhead, only by the second workhead or while being contacted by both the first workhead and the second workhead.

14. The system according to any of claims 12 or 13, wherein, in use, the X-ray machine is utilized after the grinding the outer peripheral surface of the workpiece and before the grinding the face of the workpiece.

15. The system according to any of claims 12 to 14, wherein the at least one first grinding wheel is configured to grind the outer peripheral surface of the workpiece such that it is substantially flat.
